# EUROPÄISCHE PATENTSCHRIFT

(11) **EP 3 149 247 B1**
(45) Veröffentlichungstag und Bekanntmachung des Hinweises auf die Patenterteilung: **26.09.2018**
(21) Anmeldenummer: 15711038.8
(22) Anmeldetag: 20.02.2015
(51) Int. Cl.: E02B 8/08

(54) **FISCHAUFSTIEGSANLAGE**
FISH MIGRATION AID
PASSE À POISSONS

(30) Priorität: 27.05.2014 CH 813142014
(43) Veröffentlichungstag der Anmeldung: 05.04.2017
(73) Patentinhaber: WRH Walter Reist Holding AG, 8272 Ermatingen (CH)
(72) Erfinder: MÖCKLI, Heinz, CH-8624 Grüt (CH); LEU, Willy, CH-8330 Pfäffikon (CH)
(74) Vertreter: Frei Patent Attorneys
(86) Internationale Anmeldenummer: PCT/CH2015/000021
(87) Internationale Veröffentlichungsnummer: WO 2015/179990

(56) Entgegenhaltungen:
- EP-A2- 2 157 243
- WO-A1-2006/071010
- AT-U1- 9 955
- JP-A- H11 315 528
- JP-A- 2004 068 571
- JP-A- 2012 188 877

## Beschreibung

Die Erfindung liegt auf dem Gebiet des Gewässerbaus und betrifft ein Einzelbecken für eine Fischaufstiegsanlage für Fische zur Überwindung eines Hindernisses zwischen einem oberseitigen Wasser-Zulauf und einem unterseitigen Wasser-Ablauf sowie eine Fischaufstiegsanlage.

Die Fischaufstiegsanlage enthält eine Mehrzahl von miteinander verbundenen, eine Durchflussstrecke ausbildenden Einzelbecken mit jeweils einer, einen Wasseraufnahmeraum ausbildenden Aussenwandanordnung und einer Transferschlitzöffnung für den Durchfluss von Wasser zwischen benachbarten Einzelbecken.

Solche Fischaufstiegsanlagen werden auch als Fischpass, Fischweg, Fischwanderhilfe oder umgangssprachlich auch als Fischtreppe bezeichnet.

Eine Fischaufstiegsanlage ist eine wasserbauliche Vorrichtung an Fliessgewässern, um Fischen, z. B. im Rahmen der Fischwanderung, und gegebenenfalls auch anderen Wasserorganismen die Möglichkeit zu geben, Hindernisse wie etwa Stauwehre, Kraftwerksstufen, Stufen allgemein, Wasserfälle oder allgemein ein Gefälle zu überwinden. Die Hindernisse können künstlich oder natürlich sein.

Fische und auch andere Wasserorganismen sind auf die Durchwanderbarkeit der Gewässer angewiesen. Fischaufstiegshilfen zur Sicherstellung der Durchwanderbarkeit sind im Stand der Technik bekannt. In der Regel handelt es sich bei den bekannten Fischaufstiegshilfen um massive Bauwerke aus Beton, welche mit grossem Aufwand und oftmals auch mit erheblichen Geländeeingriffen verbaut werden. Solche Anlagen sind entsprechend teuer und unflexibel.

Durch gesetzliche Regulierungen werden Gemeinden und Kommunen zunehmend verpflichtet, die Fliessgewässer für Fische durchgängig passierbar zu machen. Oftmals fehlt den Gemeinden und Kommunen jedoch das Geld, um derart aufwändige Bauwerke zu finanzieren. Ferner sind herkömmliche Konstruktionen oftmals auch nicht flexibel genug, um lokalen Gegebenheiten Rechnung zu tragen. Das heisst, jede Fischaufstiegsanlage muss aufgrund lokaler Gegebenheiten von Grund auf neu konzipiert werden.

Die Publikationsschrift DE 20 2005 010 752 U1 beschreibt eine Fischaufstiegshilfe, welche aus einzelnen Trögen zusammengesetzt ist. Die Anordnung der Tröge erfolgt übereinander um eine zentrale Achse. Die Fischaufstiegshilfe ist aus werkmässig hergestellten, gleichen Teilen gefertigt.

Die Publikationsschrift EP 2 157 243 A2 offenbart eine Fischwanderhilfe, welche entlang einer ersten Länge wenigstens zwei Schlitzpässe sowie wenigstens ein Becken umfasst, wobei das Becken zwischen jeweils zwei der wenigstens zwei Schlitzpässe ausgebildet ist. Jeder Schlitzpass bildet für den Durchfluss von Wasser in einer Schlitzdurchflussrichtung wenigstens einen von der Fischwanderhilfe mitumfassten Schlitz aus.

Die Publikationsschrift AT 9 955 U1 offenbart eine als Fischwanderhilfe ausgebildete Anordnung an fliessenden Gewässern, welche strömungsberuhigte Räume umfasst, in welchen Einbaukörper zur Beruhigung der Strömung beitragen.

Die Publikationsschriften JP H11 315528 A, WO 2006/071010 A1, JP 2004 068571 A und JP 2012 188877 A offenbaren ebenfalls Fischwanderhilfen für fliessende Gewässer.

Herkömmliche Fischaufstiegsanlagen weisen den Nachteil auf, dass diese als unflexible, massive Bauwerke ausgeführt sind. Modulare Lösungen wiederum weisen konstruktive Mängel auf und erfüllen die funktionellen Anforderungen an eine Fischaufstiegsanlage nicht in einem befriedigenden Masse.

Es ist daher eine Aufgabe vorliegender Erfindung, ein Einzelbecken für eine Fischaufstiegsanlage sowie eine Fischaufstiegsanlage vorzuschlagen, welche flexibel in ihrem Aufbau sowie günstig in der Herstellung und Errichtung ist. Die Fischaufstiegsanlage soll schnell und einfach aufbaubar sein. Ferner soll die Fischaufstiegshilfe auch wieder schnell und einfach sowie wiedereinsetzbar abbaubar sowie umbaubar sein.

Eine weitere Aufgabe vorliegender Erfindung besteht darin, mit der Fischaufstiegsanlage optimale Aufstiegsbedingungen für die Fische bereitzustellen. Dies soll unter anderem durch optimale Durchströmbedingungen erreicht werden.

Die Fischaufstiegsanlage soll ferner auch optimale Abstiegsbedingungen für die Fische schaffen.

Andererseits soll die Brauchwassermenge für den Betrieb der Fischaufstiegsanlage so gering wie möglich gehalten werden, da dieses Wasser bei Kraftwerksanlagen zur Erzeugung elektrischer Energie sonst fehlt.

Im Weiteren soll die Fischaufstiegsanlage auch für den Aufstieg und Abstieg von Makrozoobenthos geeignet sein. "Makrozoobenthos" ist ein Sammelbegriff für tierische Organismen, welche auf dem Gewässerboden leben und insbesondere von Auge erkennbar sind. Solche tierische Organismen können Schnecken, Kleinkrebse, Muscheln, Würmer oder Insektenlarven sein.

Die Aufgabe wird durch die Merkmale der unabhängigen Ansprüche 1 und 8 gelöst. Weitere Ausführungsformen und Weiterbildungen der Erfindung gehen aus den abhängigen Patentansprüchen sowie aus der Beschreibung und den Figuren hervor. Merkmale, welche das Einzelbecken betreffen und im Zusammenhang mit der Fischaufstiegsanlage offenbart werden, treffen auch unabhängig von der Fischaufstiegsanlage auf das Einzelbecken zu.

Die Erfindung zeichnet sich dadurch aus, dass die Einzelbecken jeweils eine Innenwandanordnung enthalten, welche den Aufnahmeraum der Einzelbecken jeweils in einen ersten und zweiten Wasseraufnahmeraum unterteilen, wobei die Wasseraufnahmeräume über eine Durchflussschlitzöffnung für den Durchfluss des Wasser aus dem ersten Wasseraufnahmeraum in den zweiten Wasseraufnahmeraum miteinander verbunden sind.

Die Durchflussschlitzöffnung kann vollständig durch die Innenwandanordnung oder durch die Innen- und Aussenwandanordnung ausgebildet werden.

Die Aussenwandanordnung des Einzelbeckens bildet ferner stromaufwärts insbesondere eine Einlassöffnung zum ersten Wasseraufnahmeraum hin aus.

Der Öffnungsquerschnitt der Einlassöffnung ist insbesondere gleich gross oder grösser ist als der Öffnungsquerschnitt der Transferschlitzöffnung. Der Öffnungsquerschnitt der Einlassöffnung ist insbesondere gleich gross oder grösser als der Öffnungsquerschnitt der Durchflussschlitzöffnung.

Das Einzelbecken mit dem ersten und zweiten Wasseraufnahmeraum ist so ausgelegt, dass das Wasser durch die Einlassöffnung in den ersten Wasseraufnahmeraum, dann über die Durchflussschlitzöffnung in den zweiten Wasseraufnahmeraum und von dort über die Transferschlitzöffnung wieder aus dem Einzelbecken heraus fliesst.

Das Wasser fliesst dabei über die Transferschlitzöffnung aus einem stromaufwärts angeordneten ersten Einzelbecken heraus und über die Einlassöffnung in ein unmittelbar stromabwärts folgendes zweites Einzelbecken hinein.

Die Einzelbecken können auch Einzelgefässe genannt werden. Die Einzelbecken enthalten jeweils insbesondere einen Boden. Der Boden der Einzelgefässe ist in der Fischaufstiegsanlage, also in Betriebsposition, insbesondere horizontal ausgerichtet.

Der Boden des Einzelbeckens kann durchlässig sein. Dies kann insbesondere bei Einzelbecken der Fischaufstiegsanlage der Fall sein, welche dem Untergrund bzw. der Gewässersohle direkt aufliegen. Dies trifft insbesondere auf das stromabwärts, unterste Einzelbecken zu, dessen Transferschlitzöffnung in den Mündungsbereich im Unterwasser mündet.

Der Boden ist also zum Untergrund bzw. zur Gewässersohle hin durchlässig, so dass Organismen aus dem Untergrund bzw. der Gewässersohle durch den durchlässigen Boden in das Einzelbecken, insbesondere in das eine Sohle im Einzelbecken ausbildende Substrat eindringen können und umgekehrt.

Der durchlässige Boden kann beispielsweise durch eine perforierte Wand oder durch Maschendraht bzw. ein Drahtgitter ausgebildet sein.

Die Grösse der Einzelbecken ist von der Grösse des grössten Fisches abhängig, welcher die Fischaufstiegsanlage passieren soll. Als Faustregel gilt, dass die Länge des Einzelbeckens mindestens drei Mal so lange sein soll wie der längste Fisch.

Die Öffnungsschlitze sind insbesondere vertikal oder im wesentlichen vertikal ausgerichtet. Im wesentlichen vertikal ausgerichtet bedeutet einen Winkel von weniger als 45° (Winkelgrade), insbesondere 20°, gegenüber einer Vertikalen.

Die Öffnungsschlitze (Durchflussöffnungsschlitze, Transferöffnungsschlitze), auch Schlitzpforten genannt, können über ihre Längserstreckung bzw. vertikale Erstreckung eine gleichbleibende Schlitzbreite aufweisen. Die Schlitzbreite kann auch zum Boden hin kontinuierlich oder stufenartig abnehmen. So kann der Öffnungsschlitz V-förmig ausgebildet sein.

Die Öffnungsschlitze sind gegen oben insbesondere offen. Die Öffnungsschlitze können bis zum Boden des Einzelbehälters bzw. bis zur Sohle im Einzelbecken reichen.

Die Öffnungsschlitze stellen eine Verengung des Durchflussquerschnittes dar, was zu einer Beschleunigung der Strömung führt. Die beschleunigte Strömung hat unter anderem die Wirkung einer Lockströmung bzw. Leitströmung für die Fische. So sorgen die Öffnungsschlitze in den Becken wiederholt für Lockströmungen entlang der Durchströmstrecke.

Die Aussenwandanordnung umfasst Aussenwände, welche den Aufnahmeraum der Einzelbecken nach aussen begrenzen.

Die Innenwandanordnung umfasst eine oder mehrere Innenwände innerhalb der Aussenwandanordnung. Die Wände der Innenwandanordnung können niedriger ausgebildet sein als die Wände der Aussenwandanordnung.

Der zweite Wasseraufnahmeraum kann insbesondere von Innenwänden der Innenwandanordnung und von Aussenwänden der Aussenwandanordnung ausgebildet werden.

Die Wasseraufnahmeräume sind durch die Innen- bzw. Aussenwände insbesondere als Kammern ausgebildet. Diese sind insbesondere gegen oben offen ausgebildet. Damit die Fische in der Fischaufstiegshilfe vor Fressfeinden, wie Reiher, geschützt sind, können die Wasseraufnahmeräume bzw. die Einzelbecken gegen oben eine vollständige oder teilweise Abdeckung aufweisen. Die Abdeckung kann lösbar montiert sein.

Die Transferschlitzöffnung ist insbesondere eine Abflussöffnung für den Abfluss des Wassers aus dem zweiten Wasseraufnahmeraum des ersten Einzelbeckens in den ersten Wasseraufnahmeraum des benachbarten, zweiten Einzelbeckens.

Die Transferschlitzöffnung ist daher in den Einzelbecken insbesondere so angeordnet, dass das Wasser aus dem zweiten Wasseraufnahmeraum eines stromaufwärts benachbarten, ersten Einzelbeckens über die Transferschlitzöffnung in den ersten Wasseraufnahmeraum eines stromabwärts anschliessenden, zweiten Einzelbeckens abfliessen kann.

Die Transferschlitzöffnung kann durch Innenwände ausgebildet sein. Die Transferschlitzöffnung kann auch durch Aussenwände ausgebildet sein. Die Transferschlitzöffnung kann ferner auch von einem ersten Wandabschnitt der Innenwandanordnung und einem zweiten Wandabschnitt der Aussenwandanordnung ausgebildet sein.
Die Transferschlitzöffnung bzw. der zweite Wasseraufnahmeraum ist insbesondere so ausgebildet, dass beim Durchströmen des Wassers durch die Transferschlitzöffnung eine Änderung der Fliessrichtung insbesondere gegenüber der Fliessrichtung durch die Durchflussschlitzöffnung erzwungen wird.

Das durch die Transferschlitzöffnung strömende Wasser wird schräg zur mittleren Strömungsrichtung in das stromabwärts benachbarte Einzelbecken eingeleitet.
So wird das Wasser durch diese Richtungsänderung insbesondere gegenüber der Strömungsrichtung durch die Durchflussschlitzöffnung bzw. gegenüber einer Hauptströmungsrichtung in einem Winkel in das stromabwärts benachbarte Einzelbecken geleitet. Die Einströmrichtung in das anschliessende Einzelbecken ist daher nicht direkt zur Durchflussschlitzöffnung in diesem Einzelbecken gerichtet. Das einfliessende Wasser wird vielmehr zur nachfolgend noch beschriebenen Beruhigungszone hin abgelenkt.

Das Einzelbecken mit dem ersten und zweiten Aufnahmeraum sowie der Beruhigungszone, der Durchflussschlitzöffnung und der Transferschlitzöffnung ist insbesondere derart ausgebildet, dass das Wasser im Einzelbecken einen Omega-(Ω)-förmigen Strömungsverlauf aufweist.

Das Wasser wird durch die Transferschlitzöffnung des stromaufwärts angeordneten Einzelbeckens schräg zur Beruhigungszone hin in den ersten Aufnahmeraum des stromabwärts angeordneten Einzelbeckens eingeleitet. Das Wasser fliesst dabei in einer schlaufenförmigen Fliessbewegung zur Beruhigungszone und anschliessend in einer Querströmung zur Durchlassschlitzöffnung hin.

Der zweite Wasseraufnahmeraum ist dabei insbesondere derart ausgestaltet, dass die Richtung des durch die Transferschlitzöffnung aus dem zweiten Wasseraufnahmeraum ausströmenden Wassers gegenüber einer, durch den Durchflussquerschnitt der Einlassöffnung ausgebildeten Durchflussebene einen Winkel von grösser 0° und von kleiner 90° einschliesst.

Der Winkel kann grösser 20° sein. Der Winkel kann grösser 30° sein. Der Winkel kann grösser 40° sein.

Der Winkel kann kleiner 70° sein. Der Winkel kann kleiner 60°. Der Winkel kann kleiner 50°.

Der Winkel kann insbesondere 45° sein.

Gemäss einer Ausführungsvariante der Erfindung bildet der zweite Wasseraufnahmeraum einen Wasserführungskanal mit einem einströmseitigen ersten Kanalabschnitt und einem ausströmseitigen zweiten Kanalabschnitt aus. Der zweite Kanalabschnitt ist gegenüber dem ersten Kanalabschnitt um einen Winkel von grösser 0° und von kleiner 90° geneigt. Der zweite Kanalabschnitt bildet die Transferschlitzöffnung aus.

Der Winkel kann grösser 20° sein. Der Winkel kann grösser 30° sein. Der Winkel kann grösser 40° sein.

Der Winkel kann kleiner 70° sein. Der Winkel kann kleiner 60°. Der Winkel kann kleiner 50°.

Der Winkel kann insbesondere 45° sein.

Der Durchflussquerschnitt des zweiten Kanalabschnitts ist insbesondere kleiner als der Durchflussquerschnitt des ersten Kanalabschnitts.

Gemäss dieser Ausführungsform können zwei Einzelbecken über Aussenwände miteinander verbunden werden, wobei die Transferschlitzöffnung des stromaufwärts angeordneten Einzelbeckens mit der Einlassöffnung des stromabwärts anschliessenden Einzelbeckens zusammengeführt wird.

Gemäss einer weiteren Ausführungsform wird die Transferschlitzöffnung durch zwei Wandabschnitte ausgebildet, welche zueinander versetzt angeordnet sind. Die versetzte Anordnung kann z. B. durch zwei Wandabschnitte realisiert sein welche in zwei zueinander parallelen jedoch voneinander beabstandeten Ebenen verlaufen. Durch die versetzte Anordnung wird beim Durchströmen des Wassers durch die Transferschlitzöffnung eine Änderung der Fliessrichtung, wie oben beschrieben, bewirkt.

Die Transferschlitzöffnung kann in ihrer Breite einstellbar sein, so dass sich die Durchflussmenge steuern lässt. Die Verstellbarkeit kann durch einen verschiebbaren Wandabschnitt erfolgen. Der verschiebbare Wandabschnitt kann in einer Langlochführung geführt sein.

Die Durchflussschlitzöffnung kann in gleicher Weise in ihrer Breite einstellbar sein, so dass sich die Durchflussmenge steuern lässt.

In der Aussenwandanordnung der Einzelbecken können Verbindungsbereiche bzw. Verbindungsschnittstellen ausgebildet sein, über welche das Einzelbecken mit benachbarten Einzelbecken verbunden werden kann.

So enthält das Einzelbecken insbesondere einen Verbindungsbereich zum Verbinden des Einzelbeckens mit einem stromaufwärts angeordneten Einzelbecken. Ferner enthält das Einzelbecken insbesondere einen weiteren Verbindungsbereich zum Verbinden des Einzelbeckens mit einem stromabwärts angeordneten Einzelbecken.

Die Verbindungsbereiche können insbesondere Verbindungsflächen umfassen, über welche zwei benachbarte Einzelbecken flächig miteinander verbunden sind.

Die Verbindungsflächen können als Verbindungsflansche in der Aussenwandanordnung ausgebildet sein.

Die Verbindungsfläche zum stromabwärts angeordneten Einzelbecken kann flanschartig über den Boden hinaus nach unten verlängert sein. Damit wird berücksichtigt, dass das Einzelbecken stromabwärts stufenförmig nach unten versetzt angeordnet sein kann.

Die Verbindungsfläche zum stromaufwärts angeordneten Einzelbecken kann flanschartig über die Aussenwände nach oben verlängert sein. Damit wird berücksichtigt, dass das Einzelbecken stromaufwärts stufenförmig nach oben versetzt angeordnet sein kann.

Die Verbindung kann insbesondere lösbar sein. Die Verbindung kann über Verbindungsmittel, wie Schrauben oder Nieten, erfolgen. So können die Becken über Schraubverbindungen miteinander verbunden sein. Die Schraubverbindungen können die Verbindungsflächen durchdringen.

Die Aussenwandanordnung bildet in dem zum stromaufwärts gerichteten Verbindungsbereich insbesondere jeweils die Einlassöffnung aus. Die Einlassöffnung bildet den Einlass in den ersten Wasseraufnahmeraum aus. Die Einlassöffnung kann bis zum Boden des Einzelbeckens reichen.

Die Aussenwandanordnung kann in dem zum stromabwärts gerichteten Verbindungsbereich jeweils eine Auslassöffnung ausbilden. Die Auslassöffnung bildet hier insbesondere einen Auslass aus dem Einzelbecken in das stromabwärts benachbart angeordnete Einzelbecken im Anschluss an die Transferschlitzöffnung aus. Die Auslassöffnung kann bis zum Boden des Einzelbeckens reichen.

Der Öffnungsquerschnitt der Auslassöffnung ist insbesondere gleich gross oder grösser als der Öffnungsquerschnitt der Transferschlitzöffnung. Der Öffnungsquerschnitt der Auslassöffnung ist insbesondere gleich gross oder grösser als der Öffnungsquerschnitt der Durchflussschlitzöffnung.

Die, Einlassöffnung kann zum Beispiel durch Verbindungsflächen eingegrenzt sein.

Die Auslassöffnung kann zum Beispiel durch Verbindungsflächen eingegrenzt sein.

So können die Verbindungsflächen die Einlass bzw. Auslassöffnung U-förmig einfassen. Die Einlass bzw. Auslassöffnung ist insbesondere nach oben offen.

Der Durchflussquerschnitt der Auslassöffnung ist insbesondere Deckungsgleich zum Durchflussquerschnitt der Einlassöffnung.

Zur Herstellung der Fischaufstiegsanlage wird das Einzelbecken gemäss einer besonderen Ausführungsform über erste Verbindungsflächen mit zweiten Verbindungsflächen eines stromaufwärts angeordneten, insbesondere baugleichen, Einzelbeckens verbunden. Ferner wird das Einzelbecken über zweite Verbindungsflächen mit ersten Verbindungsflächen eines stromabwärts angeordneten, insbesondere baugleichen, Einzelbeckens verbunden.

Auf diese Weise werden jeweils die Auslassöffnung bzw. Transferschlitzöffnung und die Einlassöffnung zweier Einzelbecken aneinander gefügt.

Einlass- und Auslassöffnung weisen insbesondere denselben Öffnungsquerschnitt auf.

Zwei benachbarte Einzelbecken sind jeweils insbesondere stufen- bzw. treppenartig gegeneinander abgestuft angeordnet. Auf diese Weise entsteht ein Gefälle zwischen jeweils zwei Einzelbecken. Es können jedoch auch Einzelbecken vorgesehen sein, deren Aufnahmeraum als Ganzes als Ruhezone dient. Diese Einzelbecken sind gegenüber dem stromaufwärts angrenzenden Einzelbecken insbesondere auf gleicher Höhe, also nicht stufenartig versetzt, angeordnet.

Die Fischaufstiegsanlage kann eine als Unterbau ausgestaltete Stützstruktur enthalten. Die Einzelbecken sind insbesondere auf der Stützstruktur abgestützt und an dieser befestigt. Die Stützstruktur kann über Stützfüsse auf dem Terrain abgestützt sein. Die Stützfüsse können insbesondere über ein Fundament auf dem Terrain abgestützt sein. Die Stützstruktur kann eine Treppenform aufweisen. Die Einzelbecken sind auf den Treppenstufen angeordnet und befestigt.

Die Stützstruktur kann insbesondere ein Untergestell sein. Das Untergestell kann aus Metall, wie Stahl sein.

Es ist auch möglich, dass die Einzelbecken der Landschaft angepasst in das Gelände eingebaut werden.

Ferner können die Einzelbecken auch miteinander zu einer freitragenden Struktur verbunden sein. Gemäss dieser Ausführungsform können lediglich das erste und das letzte Einzelbecken, welche das Ende einer Abfolge von miteinander verbundenen Einzelbecken ausbilden, auf einer Auflage abgestützt sein. Die Einzelbecken können insbesondere freitragend über dem Gewässer angeordnet sein.

Am Ende der Durchflussstrecke enthält die Fischaufstiegsanlage ein unterstes Einzelbecken. Die Transferschlitzöffnung dieses Einzelbeckens mündet insbesondere in einem Mündungsbereich im Unterwasser.

Das Einzelbecken kann eine sich in Fliessrichtung trichterförmig verengende Abflussstrecke enthalten, über welche das Wasser wieder zurück in den Unterwasserbereich des Fliessgewässers strömt. Die trichterförmige Verengung in Fliessrichtung bewirkt eine Beschleunigung der Strömung zur Einmündung in das Fliessgewässer hin.

Die beschleunigte Strömung bei der Einmündung dient dabei als Lockströmung für die Fische, damit die Fische den Einstieg zur Fischaufstiegsanlage besser finden.

Gemäss einer Weiterbildung der Fischaufstiegsanlage kann eine Wasserleitung vorgesehen sein, mittels welcher zusätzliches Wasser zur Einmündung der Fischaufstiegsanlage in den Unterwasserbereich des Fliessgewässers vorgesehen sein. Das zusätzliche Wasser soll dabei die Lockströmung verstärken. Die Wasserleitung kann vom Oberwasser zum Unterwasser des Fliessgewässers geführt sein. Die Wasserleitung kann ein Kanal, ein Schlauch oder eine Rohrleitung sein.

Gemäss einer Weiterbildung der Fischaufstiegsanlage ist am untersten Einzelbecken wenigstens ein Wasserleitelement angeordnet, mittels welchem die Fliessrichtung des durch die Transferschlitzöffnung strömenden Wassers im Mündungsbereich einstellbar ist. Das wenigstens eine Wasserleitelement ist insbesondere lösbar am Einzelbecken befestigt, z. B. mittels Schraubverbindungen.

Das wenigstens eine Wasserleitelement kann in Fliessrichtung eine trichterförmige Verengung oder eine trichterförmige Erweiterung ausbilden. Auf diese Weise lässt sich die Fliessgeschwindigkeit des durch die Transferschlitzöffnung fliessenden Wassers im Mündungsbereich beeinflussen.

Das wenigstens eine Wasserleitelement kann als Adapterelement ausgebildet sein, welches zwecks Einstellen der Fliessrichtung im Mündungsbereich aussen am Einzelbecken im Bereich der Transferschlitzöffnung anbringbar ist.

So kann ein Adaptersatz mit mehreren Wasserleitelementen zur Verfügung gestellt werden, aus welchem je nach gewünschter Fliessrichtung im Mündungsbereich das passende Wasserleitelement ausgewählt und am Einzelbecken angebracht wird.

Dies eröffnet die Möglichkeit, die Fliessrichtung und die Fliessgeschwindigkeit im Mündungsbereich vor Ort den lokalen Gegebenheiten anzupassen, so dass eine ideale Lockströmung für die Fische ausgebildet werden kann.

Ferner kann dadurch auch die Fliessrichtung und Fliessgeschwindigkeit im Mündungsbereich bei bereits installierten Fischaufstiegsanlagen noch nachträglich angepasst werden.

Die Erfindung betrifft auch ein Einzelbecken für eine oben beschriebene Fischaufstiegsanlage. Das erfindungsgemässe Einzelbecken enthält eine, einen Wasseraufnahmeraum ausbildende Aussenwandanordnung. Ferner enthält das Einzelbecken eine Transferschlitzöffnung für den Durchfluss von Wasser zwischen benachbarten Einzelbecken.

Das Einzelbecken zeichnet sich durch eine Innenwandanordnung aus, welche das Einzelbecken in einen ersten und zweiten Wasseraufnahmeraum unterteilt. Die Wasseraufnahmeräume sind über eine Durchflussschlitzöffnung für den Durchfluss des Wassers aus dem ersten Wasseraufnahmeraum in den zweiten Wasseraufnahmeraum miteinander verbunden.

Die Innenwandanordnung bzw. der zweite Wasseraufnahmeraum ist so im Einzelbecken angeordnet, dass im ersten Wasseraufnahmeraum eine Beruhigungszone ausgebildet wird, welche von der Durchflussströmung abgekoppelt und entsprechend strömungsarm ist. In der Beruhigungszone findet insbesondere keine Durchströmung statt. Die Beruhigungszone ist z. B. stromabwärts betrachtet neben dem zweiten Wasseraufnahmeraum und insbesondere auch neben der Durchlassschlitzöffnung angeordnet.
Die Beruhigungszone bildet eine Ruhewasserzone aus, in welcher sich die Fische und andere Organismen abseits der Durchflussströmung erholen können. Mit einer solchen Beruhigungszone wird dem unterschiedlichen Leistungsvermögen der Fische Rechnung getragen. Die Fischaufstiegsanlage ermöglicht so für die meisten Fischarten einen stress- und verletzungsfreien Aufstieg.
Die Beruhigungszone kann z. B. ein taschenartiger Teilraum sein. Dieser Teilraum zeichnet sich z. B. dadurch aus, dass die Ein- und Ausströmrichtung auf derselben Seite liegen.
Das Einzelbecken ist insbesondere aus faserverstärktem Kunststoff hergestellt. Verstärkungsfasern können Glasfasern sein. Der Kunststoff ist insbesondere ein Duroplast. So kann der Kunststoff ein Epoxidharz sein. Das Einzelbecken kann jedoch auch aus Metall, wie Stahl, aus Holz, aus Beton oder aus Faserzement sein. Das Einzelbecken enthält insbesondere auch einen Boden. Am Boden des Einzelbeckens können feststehende, d.h. ortsfeste, Rückhalteelemente zum Zurückhalten eines lockeren Substrates, wie Kies oder Sand. angeordnet sein. Das Substrat bildet insbesondere über dem Boden für das Wasser eine Sohle aus.

Das Substrat ist bedeutsam, damit neben Fischen auch Makrozoobenthos die Fischaufstiegsanlage passieren können. Das Substrat bildet folglich einen Benthos-Korridor aus.

Das lockere Substrat, welches sonst den Strömungskräften ausgesetzt ist, wird auf diese Weise zwischen den Rückhalteelementen zurückgehalten. Die Rückhalteelemente verhindern also, dass das Substrat durch die Strömung mitgerissen wird.

Rückhalteelemente sind insbesondere im ersten Aufnahmeraum angeordnet. Rückhalteelemente können jedoch auch im zweiten Aufnahmeraum angeordnet sein.

Die Rückhalteelemente sind insbesondere mit dem Einzelbecken, insbesondere dem Boden, verbunden oder in das Einzelbecken, insbesondere in den Boden, integriert.

Die Rückhalteelemente können z. B. buckelförmig, zapfenförmig oder wulstförmig sein. Die Rückhalteelemente sind insbesondere der Form von Steinen nachempfunden, um ein natürliches Erscheinungsbild zu gewährleisten.

Ferner können die Rückhalteelemente auch gitterartige Strukturen, wie Drahtgeflechte (Maschendraht) sein, welche das Substrat zurückhalten.

Die Rückhalteelemente können auch ortsfest am Boden angeordnete Querelemente, wie Querrippen, sein. Die Querelemente sind insbesondere quer zur Durchflussrichtung des Wassers angeordnet. Die Querelemente schaffen auf diese Weise Aufnahmefächer für das Substrat.

Die Querelemente, wie Querrippen, können in Durchströmrichtung eine abnehmende Höhe aufweisen. Dadurch entsteht innerhalb des Einzelbeckens gegenüber einer Horizontalen eine geneigte Sohle mit einer in Durchströmrichtung abnehmender Höhe. Die Querrippen können so ausgelegt sein, dass die Sohle über zwei, zueinander abgestuft angeordnete Einzelbecken geneigt verläuft. D.h. die Substratoberfläche gleicht die Abstufung zu den angrenzenden Einzelbecken innerhalb des Einzelbeckens aus.

Anstelle von Querrippen können auch durchlässige Querelemente, wie z. B. gitterartige Elemente vorgesehen sein, welche im Wesentlichen dieselbe Funktion ausüben wie die Querrippen.

Das Einzelbecken kann ferner wenigstens ein Rückhalteelement zur Ausbildung einer von der Einlassöffnung stromabwärts verlaufenden Rampe im ersten Aufnahmeraum enthalten. Das wenigstens ein Rückhalteelement bildet zusammen mit dem lockeren Substrat eine von der Einlassöffnung stromabwärts verlaufende geneigte Sohle aus.

Die an die Einlassöffnung anschliessende Rampe bildet eine Zone mit starker Strömung aus. Diese Strömung dient auch als Lockströmung für die Fische zum Passieren der Transferschlitzöffnung in das stromaufwärts anschliessenden Einzelbecken.

Das lockere Substrat, mittels welchem die Rampe aufgebaut ist, erlaubt allerdings auch die Wanderung von Makrozoobenthos in das stromaufwärts unmittelbar anschliessende Einzelbecken.

Das Rückhaltelement kann in diesem Fall beispielsweise in Form eines Drahtkorbes vorliegen, welcher das lockere Substrat aufnimmt, und zurückhält.

Die Rampe endet insbesondere im ersten Aufnahmeraum. Der erste Aufnahmeraum bildet insbesondere einen stromabwärts an die Rampe anschliessenden, in Betriebsposition horizontalen Boden aus. Insbesondere der Boden in der Beruhigungszone ist in Betriebsposition horizontal ausgerichtet. Entsprechend ist der Boden in diesen Bereichen dazu ausgelegt, gegebenenfalls mit Unterstützung von Rückhalteelementen, eine horizontale Sohle auszubilden.

Die horizontalen Bereiche des Bodens im ersten Aufnahmeraum sorgen wieder für eine Verlangsamung der Strömung, so dass die Fische im Einzelbecken nicht einer permanent starken Strömung ausgesetzt sind.

Das Substrat und somit die Rückhalteelemente sind jedoch nicht zwingende Merkmale vorliegender Erfindung.

Gemäss einer Weiterbildung des Einzelbeckens weist dieses eine polygonale Grundform auf. Das Einzelbecken enthält jeweils zwei, einander nicht benachbarte erste Aussenwände und zwei, einander nicht benachbarte zweite Aussenwände, welche in einem Winkel zu den ersten Aussenwänden verlaufen. Die zweiten Aussenwände sind als Verbindungswände mit Verbindungsflächen, wie weiter oben beschrieben, ausgebildet. Zwei benachbarte Einzelbecken sind über die zweiten Aussenwände miteinander verbunden.

Das Einzelbecken kann insbesondere eine rechteckige Grundform aufweisen. Gemäss dieser Variante liegen die Transferschlitzöffnungen zweier benachbarter Einzelbecken insbesondere in einer gemeinsamen Achse, welche parallel zu den ersten Aussenwänden verläuft.

Das Einzelbecken kann auch eine Grundform aufweisen, welche auf einer Aneinanderreihung von hexagonalen, oktogonalen oder anderweitig polygonalen Grundelementen basiert. Entsprechend ist die Aussenwandanordnung zackenartig ausgebildet.

Die erfindungsgemässe Fischaufstiegsanlage zeichnet sich durch eine einfache und schnelle Montage und Demontage der Einzelbecken aus. Die Anlage lässt sich insbesondere auch problemlos umbauen oder geänderten Umgebungsbedingungen anpassen. Da die Einzelbecken wie auch eine allfällige Stützstruktur in leichtbauweise erstellt werden können, lässt sich die erfindungsgemässe Fischaufstiegsanlage, obwohl modulartig ausgeführt, ohne schweres Gerät auf- und abbauen.

Mit der erfindungsgemässen Fischaufstiegsanlage können grosse Höhenunterschiede über kurze Strecken und mit sehr geringem Flächenbedarf überwunden werden.

Die Einzelbecken können für unterschiedliche Streckenführungen, wie lineare Strecken, wendelförmige Strecken, verwinkelte Strecken, etc., konzipiert sein. Es kann vorgesehen sein, dass mehrer Typen von Einzelbecken hergestellt werden, mit welchen sich unterschiedliche Streckenführungen konzipieren lassen.

Das heisst, eine Fischaufstiegsanlage kann mittels einem oder mehreren Typen von erfindungsgemässen Einzelbecken gemäss dem Baukastenprinzip frei konzipiert werden. Die Anordnung der Einzelbecken ist insbesondere treppenförmig.

Die Einzelbecken eines Typs können baugleich in Serienfertigung hergestellt werden. Die Fischaufstiegsanlage kann entsprechend aus Einzelbecken modular aufgebaut werden.

Die Horizontallage der Einzelbecken sichert einen ruhigen und turbulenzarmen Wasserdurchfluss. Die Schlitzöffnungen in den Einzelbecken erzeugen zudem im Übergang zwischen den Einzelbecken sowie innerhalb der Einzelbecken jeweils eine interne Lockströmung für die Fische. Insbesondere die in den ersten Aufnahmeraum schräg zur Beruhigungszone hin gerichtete Strömung dient als Lockströmung, um die Fische aus der strömungsarmen Beruhigungszone herauszulocken.

Dank eines optional durchgängigen Sohlesubstrats ist die erfindungsgemässe Fischaufstiegsanlage auch für wirbellose Organismen durchwanderbar.

Die erfindungsgemässe Fischaufstiegsanlage ist zudem unempfindlich gegenüber schwankenden Wasserständen im Oberwasser.

Im Weiteren ist der Wasserbedarf für den Betrieb der erfindungsgemässen Fischaufstiegsanlage auch bei grossem Gefälle vergleichsweise gering. Trotzdem werden relativ grosse Wassertiefen in den Einzelbecken erreicht. Aufgrund der Beschleunigung des Wassers durch die Transferschlitzöffnung entwickelt sich beim Einströmen in den ersten Wasseraufnahmeraum im angrenzenden Einzelbecken eine turbulente Strömung, welche für eine Sauerstoffanreicherung sorgt.

Dasselbe trifft insbesondere auch auf die Durchflussschlitzöffnung zu. Auch hier entwickelt sich aufgrund der Beschleunigung des durch die Durchflussschlitzöffnung geführten Wassers beim Einströmen in den zweiten Aufnahmeraum eine turbulente Strömung, welche für eine Sauerstoffanreicherung sorgt.

Die Erfindung wird nachfolgend anhand von Figuren näher erläutert. Die Figuren zeigen besondere Ausführungsformen und Weiterentwicklungen der Erfindung, welche keinesfalls als abschliessend zu betrachten sind. Es zeigen:
- Figur 1:: eine Draufsicht einer schematischen Darstellung eines erfindungsgemässen Einzelbeckens;
- Figur 2:: eine Draufsicht von aneinandergereihten Einzelbecken nach Figur 1;
- Figur 3:: eine Draufsicht einer Weiterbildung des Einzelbeckens nach Figur 1;
- Figur 4:: eine Seitenansicht des Einzelbeckens nach Figur 3;
- Figur 5:: eine Seitenansicht von aneinandergereihten Einzelbecken nach Figur 3 und 4;
- Figur 6:: eine Darstellung einer ersten Grundform zur Ausbildung von erfindungsgemässen Einzelbecken;
- Figur 7:: eine Darstellung einer zweiten Grundform zur Ausbildung von erfindungsgemässen Einzelbecken;
- Figur 8:: eine Draufsicht einer schematischen Darstellung eines erfindungsgemässen Einzelbeckens gemäss der zweiten Grundform;
- Figur 9:: eine Draufsicht von aneinandergereihten Einzelbecken der zweiten Grundform nach Figur 8;
- Figur 10:: eine Draufsicht eines möglichen Verlaufs von aneinander gereihten Einzelbecken der zweiten Grundform gemäss Figur 7;
- Figur 11:: eine Draufsicht einer besonderen Ausführungsform eines erfindungsgemässen Einzelbeckens;
- Figur 12:: eine Seitenansicht von aneinandergereihten Einzelbecken nach Figur 11;
- Figur 13:: eine perspektivische Ansicht des Einzelbeckens nach Figur 11;
- Figur 14:: eine perspektivische Ansicht von, in einem verwinkelten Verlauf aneinandergereihten Einzelbecken nach Figur 13;
- Figur 15:: eine perspektivische Ansicht von aneinandergereihten, modifizierten Einzelbecken nach Figur 13;
- Figur 16:: eine perspektivische Ansicht von linear aneinandergereihten Einzelbecken nach Figur 15;
- Figur 17:: eine Draufsicht einer schematischen Darstellung von aneinandergereihten Einzelbecken gemäss einer weiteren Variante;
- Figur 18:: eine Draufsicht einer weiteren Ausführungsform von zwei miteinander verbundenen Einzelbecken;
- Figur 19a:: eine Querschnittsansicht von zwei miteinander verbundenen Einzelbecken nach Figur 18, enthaltend ein Substrat;
- Figur 19b:: eine Draufsicht der zwei miteinander verbundenen Einzelbecken gemäss 19a;
- Figur 20a:: eine Querschnittsansicht von zwei miteinander verbundenen Einzelbecken, welche den Mündungsbereich ausbilden;
- Figur 20b:: eine Draufsicht der zwei miteinander verbundenen Einzelbecken gemäss Figur 20a;
- Figur 21a-21c:: eine Draufsicht von stromabwärts untersten Einzelbecken mit unterschiedlichen Wasserleitelementen, welche den Mündungsbereich ausbilden;
- Figur 22:: eine perspektivische Ansicht einer selbsttragenden Fischaufstiegsanlage mit Einzelbecken nach Figur 15 und 16.

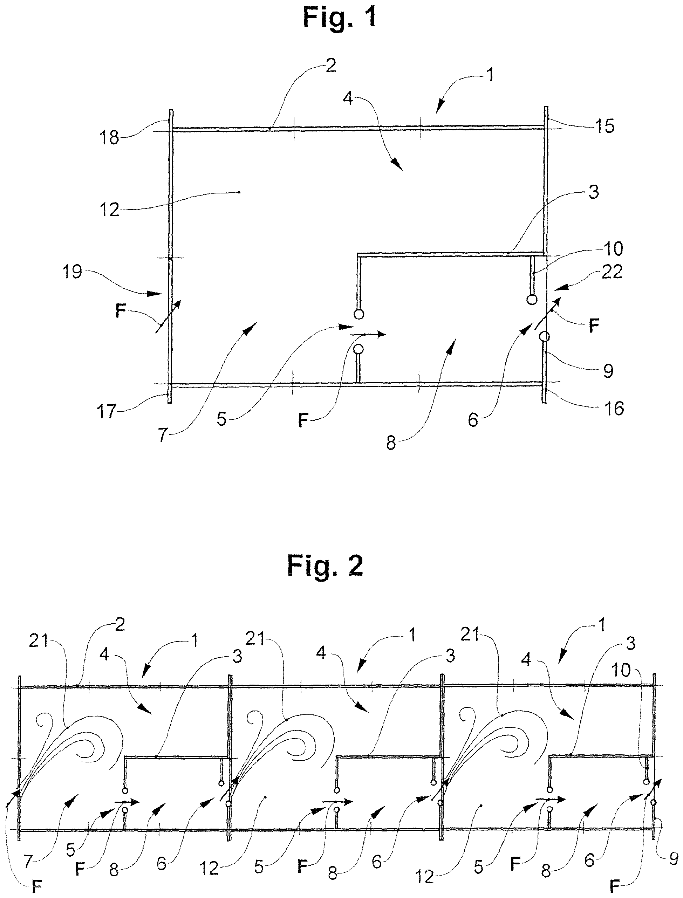

Das Einzelbecken 1 gemäss Figur 1 enthält eine Aussenwandanordnung 2 mit Aussenwänden, welche einen Aufnahmeraum 7, 8 begrenzen.

Die Aussenwandanordnung 2 bildet zum ersten Wasseraufnahmeraum 7 hin stromaufwärts eine Einlassöffnung 19 aus, über welche Wasser aus einem stromaufwärts benachbarten Einzelbecken 1 in den ersten Wasseraufnahmeraum 7 strömen kann.

Das Einzelbecken 1 enthält ferner eine Innenwandanordnung 3 mit Innenwänden, welche den Aufnahmeraum in einen ersten und zweiten Wasseraufnahmeraum 7, 8 unterteilen. Die beiden Wasseraufnahmeräume 7, 8 sind über eine Durchflussschlitzöffnung 5 in einer Innenwand der Innenwandanordnung 3 miteinander verbunden, so dass Wasser aus dem ersten Wasseraufnahmeraum 7 in den zweiten Wasseraufnahmeraum 8 strömen kann.

Die Innenwandanordnung 3 zur Ausbildung des zweiten Wasseraufnahmeraums 8 ist ferner so ausgestaltet, dass der erste Wasseraufnahmeraum 7 eine taschenförmige Beruhigungszone 4 ausbildet, bei welcher der Ein- und Ausströmbereich auf derselben Seite angeordnet ist. In der Beruhigungszone 4 findet keine Durchströmung statt, so dass sich die Fische in dieser Zone ausruhen und erholen können.

Das Einzelbecken enthält ferner einen Boden 12, auf welchem die Wandanordnungen 2, 3 abgestützt sind.

Stromabwärts ist im Weiteren eine Transferschlitzöffnung 6 in der Wandanordnung angeordnet, durch welche Wasser aus dem zweiten Wasseraufnahmeraum 8 und anschliessend auch aus dem Einzelbecken 1 abfliessen kann. Die Transferschlitzöffnung 6 wird aus einem ersten Wandabschnitt 9, welcher Teil der Aussenwandanordnung 2 ist und einem zweiten Wandabschnitt 10, welcher Teil der Innenwandanordnung 3 ist, ausgebildet. Die beiden Wandabschnitte 9, 10 sind versetzt zueinander angeordnet, so dass das Wasser beim Durchströmen durch die Transferschlitzöffnung 6 gegenüber der Strömungsrichtung F durch die Durchflussschlitzöffnung 5 eine Richtungsänderung erfährt.

Das Wasser strömt dadurch gegenüber der Strömungsrichtung F in der Durchflussschlitzöffnung 5 in einem Winkel in den ersten Wasseraufnahmeraum 7 des benachbarten Einzelbeckens 1 ein. Dadurch wird verhindert, dass das Wasser auf direktem Weg von der Einlassöffnung 19 zur Durchflussschlitzöffnung 5 strömt.

Die Aussenwandanordnung 2 bildet im Anschluss an die Transferschlitzöffnung 6 eine Auslassöffnung 22 aus, durch welche Wasser aus dem Einzelbecken 1 in ein stromabwärts benachbartes Einzelbecken 1 strömen kann.

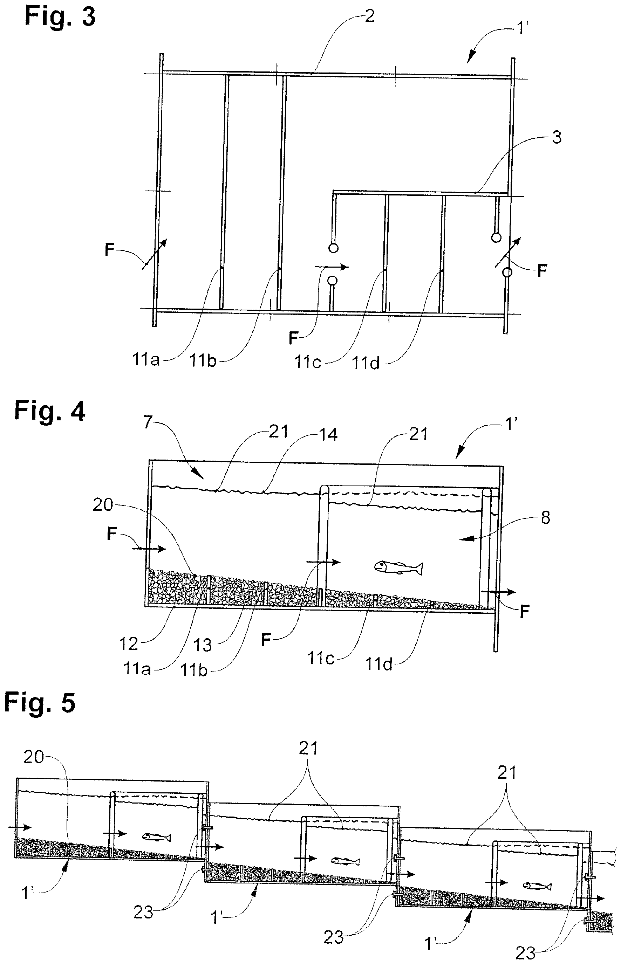

Die Aussenwandanordnung 2 enthält ferner zwei erste flanschartige Verbindungsflächen 15, 16, über welche das Einzelbecken 1 mit zweiten flanschartigen Verbindungsflächen 17, 18 insbesondere eines baugleich ausgebildeten Einzelbeckens 1 verbunden werden kann (siehe auch Figur 2 und 5). Die Einzelbecken können mittels Schrauben miteinander verbunden sein (siehe Figur 5).

Das Wasser fliesst nun in Fliessrichtung F durch die Transferschlitzöffnung 6 und die Auslassöffnung 22 eines stromaufwärts angeordneten Einzelbeckens 1 aus dem Einzelbecken 1 heraus und durch die Einlassöffnung 19 des stromabwärts unmittelbar anschliessenden Einzelbeckens 1 in den ersten Wasseraufnahmeraum 7 ein. Das einfliessende Wasser ist durch die Transferschlitzöffnung 6 zur Beruhigungszone 4 hin abgelenkt und dient daher insbesondere auch als Lockströmung, welche zur Beruhigungszone 4 hin wirkt.

Wasser fliesst aus dem ersten Wasseraufnahmeraum 7 durch die Durchflussschlitzöffnung 5 in den zweiten Wasseraufnahmeraum 8 ein. Über die Transferschlitzöffnung 6 fliesst Wasser in oben beschriebener Weise aus dem Einzelbecken 1 in das stromabwärts benachbarte Einzelbecken 1 ab (siehe auch Figur 2).

Die Ausführungsform des Einzelbeckens 1' gemäss den Figuren 3 bis 5 entspricht mit Ausnahme der nachfolgend beschriebenen Modifikationen im Wesentlichen der oben beschriebenen Ausführungsform gemäss den Figuren 1 und 2. Daher wird auf eine Wiederholung gleicher Merkmale und Funktionen verzichtet. Es werden nachfolgend lediglich die Unterscheidungsmerkmale erörtert.

Wie bereits die Ausführungsform gemäss Figur 1 und 2 enthält auch das vorliegende Einzelbecken 1' einen Boden 12. Am Boden 12 sind Querrippen 11a-11d angeordnet. Die Querrippen 11a-11d verlaufen in einem Winkel zur Strömungsrichtung F. Die Querrippen 11a-11d bilden Aufnahmeabteile aus, in welchen ein Substrat 13, wie z. B. Kies oder Sand, angeordnet ist. Die Querrippen 11a-11d dienen dazu, dass Substrat zurückzuhalten, damit dieses nicht durch die Strömung mitgerissen wird. Die Querrippen 11a-11d sind sowohl in der Durchströmzone des ersten Wasseraufnahmeraums 7 als auch im zweiten Wasseraufnahmeraum 8 angeordnet.

Die Höhe der Querrippen 11a-11d entspricht der maximalen Höhe des Substrates 13 bzw. der durch das Substrat 13 ausgebildeten Sohle 20. Diese Höhe nimmt in Strömungsrichtung F kontinuierlich ab, so dass die Sohle 20 innerhalb eines Einzelbeckens 1' in Strömungsrichtung F gegenüber einer Horizontalen ein Gefälle ausbildet.

Die Einzelbecken 1' sind gemäss Figur 5 zueinander abgestuft zu einer Fischaufstiegsanlage zusammengesetzt. Das oben beschriebene Gefälle der Sohle 20 innerhalb eines Einzelbeckens 1' dient dem Ausgleich der Abstufung zwischen den Einzelbecken 1', so dass die Sohle 20 über die Einzelbecken 1' hinweg ein kontinuierliches, stufenloses Gefälle aufweist.

Wie aus den Figuren 4 und 5 erkennbar ist, bewirkt die Unterteilung des Wasseraufnahmeraums über die Durchflussschlitzöffnung 5 in einen ersten und zweiten Wasseraufnahmeraum 7, 8 eine Abstufung des Wasserspiegels 21 innerhalb eines Einzelbeckens 1'. Dadurch kann ein abrupter Sprung des Wasserspiegels zwischen zwei benachbarten und zueinander abgestuften Einzelbecken 1' vermieden werden. Auf diese Weise können Turbulenzen im Übergang zwischen zwei Einzelbecken reduziert werden. Dasselbe trifft übrigens auch auf die anderen Ausführungsformen und auf die Erfindung im Allgemeinen zu.

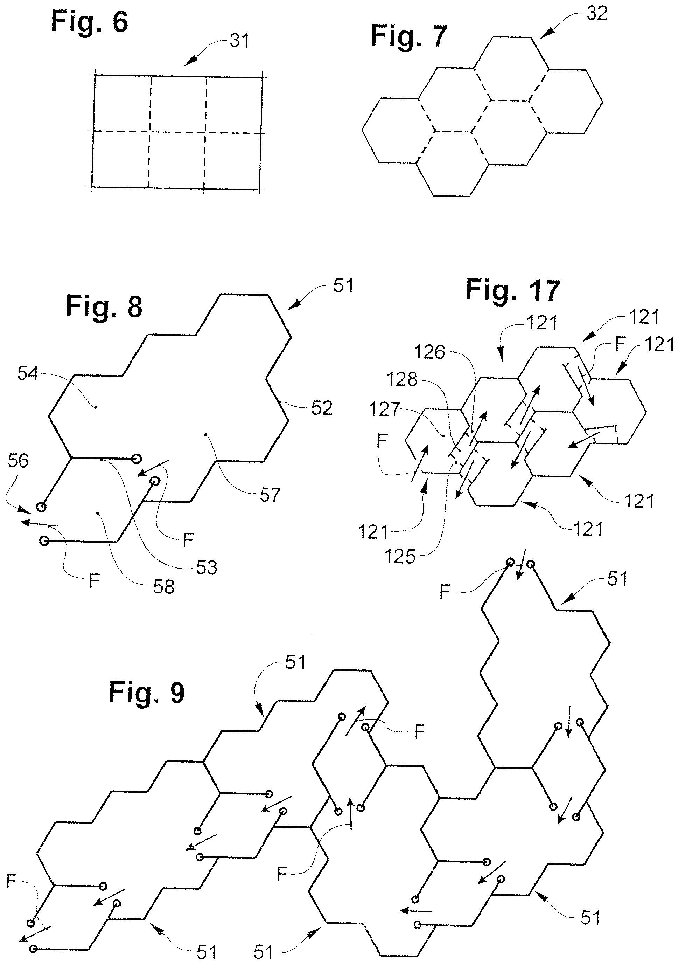

Die Figur 6 zeigt eine mögliche rechteckige Grundform 31 für Einzelbecken. Diese Grundform 31 ist beispielsweise in den Ausführungsformen nach Figur 1 bis 5 sowie 11 bis 14 umgesetzt.

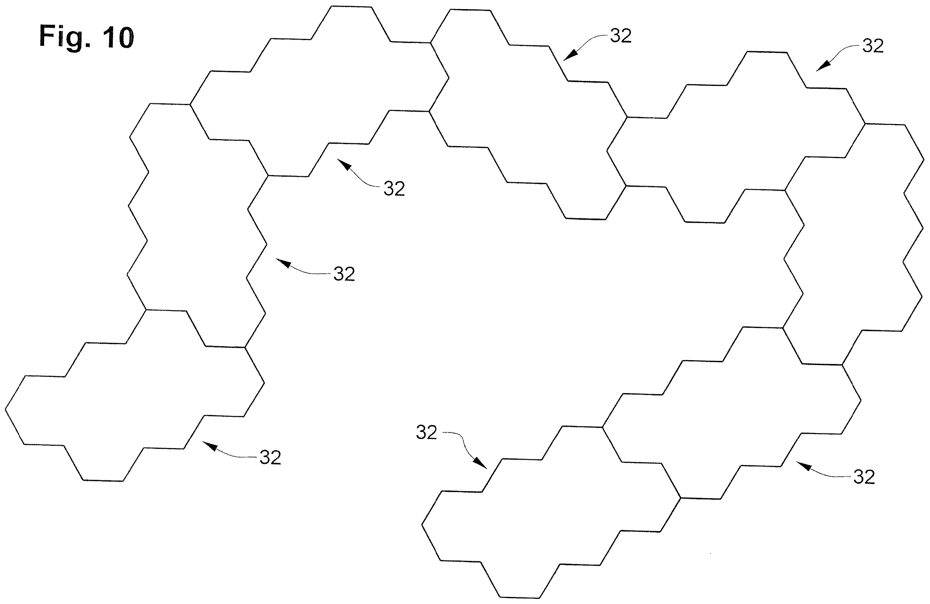

Die Figur 7 zeigt eine weitere Grundform 32, welche auf hexagonalen Grundelementen basiert. Einzelbecken von dieser Grundform 32 lassen sich über die hexagonale Teilkontur der Aussenwandanordnung formschlüssig aneinanderfügen (siehe Figur 10).

Das Einzelbecken 51 nach Figur 8 basiert beispielsweise auf einem Aneinanderfügen von hexagonalen Grundelementen. Entsprechend ist die Aussenwandanordnung 52 zackenartig ausgebildet. Die Innenwandanordnung 53 orientiert sich ebenfalls am hexagonalen Grundmuster, wobei der zweite Wasseraufnahmeraum 58 hexagonal ausgebildet ist. Die Durchflussschlitzöffnung 55 und die Transferschlitzöffnung 56 sind in hexagonal angeordneten Wandabschnitten eingelassen. Auch die Beruhigungszone 54 im ersten Wasseraufnahmeraum 57 weist eine hexagonale Form auf.

Die Figur 9 zeigt eine Fischaufstiegsanlage, welche aus einer Mehrzahl von aneinandergefügten Einzelbecken 51 nach Figur 8 errichtet ist. Die Einzelbecken 51 sind über die hexagonale Teilkontur der Aussenwandanordnung 52 formschlüssig aneinandergefügt.

Die Figur 17 wiederum zeigt eine Fischaufstiegsanlage, welche aus einer Mehrzahl von aneinandergefügten Einzelbecken 121 errichtet ist, welche hexagonal ausgebildet sind. Das Einzelbecken 121 weist also eine hexagonale Aussenwandanordnung auf. Jedes Einzelbecken 121 weist ferner eine Innenwandanordnung auf, welche den Aufnahmeraum in einen ersten und zweiten Wasseraufnahmeraum 127, 128 unterteilt. Die beiden Wasseraufnahmeräume sind über eine Durchflussschlitzöffnung 125 miteinander verbunden. Im Weiteren ist ebenfalls eine Transferschlitzöffnung 126 vorgesehen.

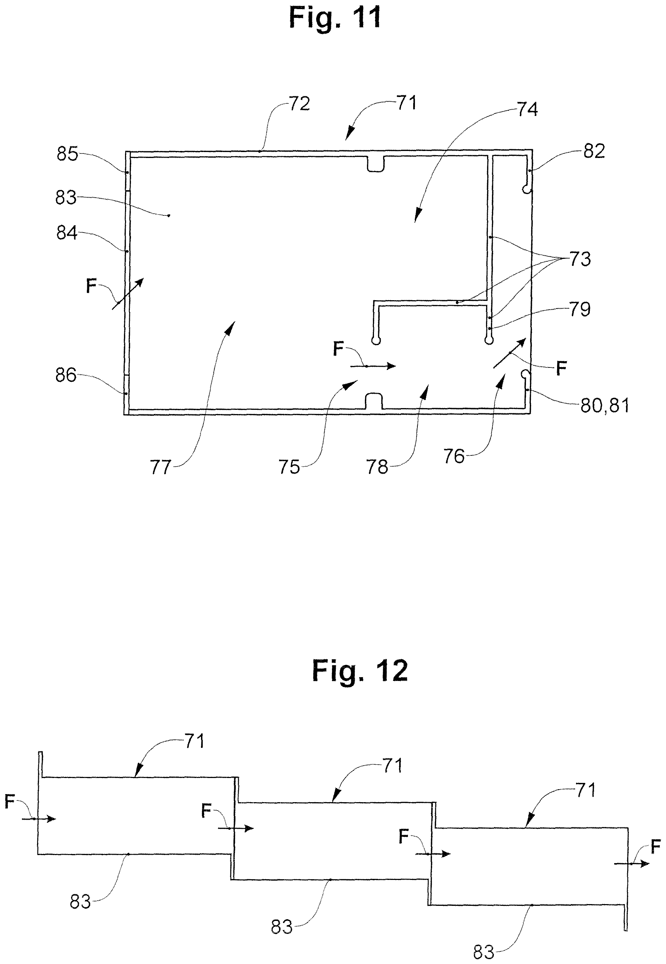

Die Figuren 11 bis 14 zeigen eine weitere Ausführungsform einer Fischaufstiegsanlage mit Einzelbecken 71.

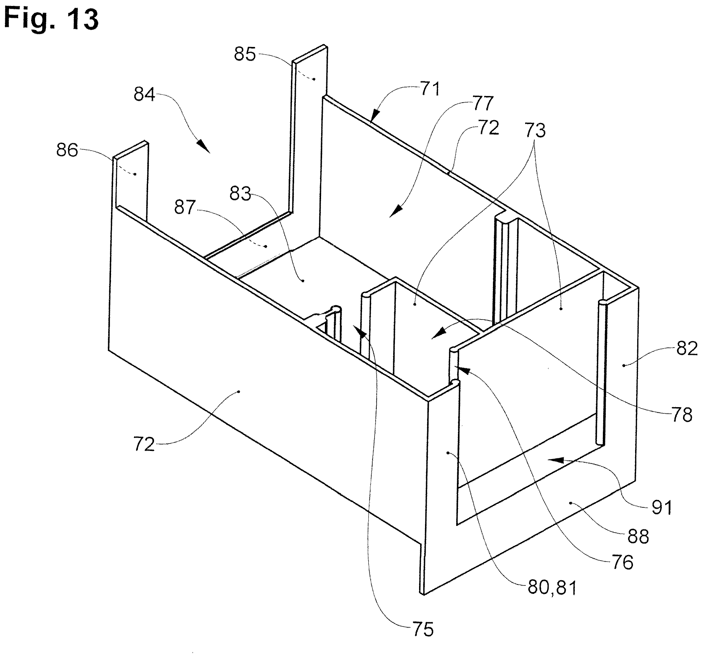

Das Einzelbecken 71 (Figur 11 und 13) enthält eine Aussenwandanordnung 72 mit Aussenwänden, welche einen Aufnahmeraum 77, 78 begrenzen.

Das Einzelbecken 71 enthält ferner eine Innenwandanordnung 73 mit Innenwänden, welche den Aufnahmeraum 77, 78 in einen ersten und zweiten Wasseraufnahmeraum 77, 78 unterteilen. Die beiden Wasseraufnahmeräume 77, 78 sind über eine Durchflussschlitzöffnung 75 in der Innenwandanordnung 73 miteinander verbunden, so dass Wasser aus der ersten Wasseraufnahmeraum 77 in den zweiten Wasseraufnahmeraum 78 strömen kann.

Die Aussenwandanordnung 72 bildet stromaufwärts zum ersten Wasseraufnahmeraum 77 hin eine Einlassöffnung 84 aus, über welche Wasser aus einem stromaufwärts benachbarten Einzelbecken 71 in den ersten Wasseraufnahmeraum 77 strömen kann.

Die Innenwandanordnung 73 zur Ausbildung des zweiten Wasseraufnahmeraums 78 ist ferner so ausgestaltet, dass im ersten Wasseraufnahmeraum 77 eine taschenförmige Beruhigungszone 74 ausbildet wird, bei welcher der Ein- und Ausströmbereich auf derselben Seite angeordnet ist. In der Beruhigungszone 74 findet keine Durchströmung statt, so dass sich die Fische in dieser Zone ausruhen und erholen können.

Stromabwärts ist im Weiteren eine Transferschlitzöffnung 76 in der Wandanordnung angeordnet, durch welche Wasser aus dem zweiten Wasseraufnahmeraum 78 und aus dem Einzelbecken 71 abfliessen kann. Die Transferschlitzöffnung 76 wird aus einem ersten Wandabschnitt 79, welcher Teil der Innenwandanordnung 73 ist und einem zweiten Wandabschnitt 80, welcher Teil der Aussenwandanordnung 72 ist, ausgebildet. Die beiden Wandabschnitte 79, 80 sind versetzt zueinander angeordnet, so dass das Wasser beim Durchströmen durch die Transferschlitzöffnung 76 gegenüber der Strömungsrichtung F durch die Durchflussschlitzöffnung 75 eine Richtungsänderung erfährt.

Die Aussenwandanordnung 72 bildet ferner eine Auslassöffnung 91 aus, über welche Wasser aus dem Einzelbecken in ein stromabwärts, benachbartes Einzelbecken 71 strömen kann. Die Auslassöffnung 91 ist in Fliessrichtung F betrachtet im Anschluss an die Transferschlitzöffnung 76 angeordnet.

Das Wasser strömt aufgrund dieser Richtungsänderung gegenüber der Strömungsrichtung F in der Durchflussschlitzöffnung 75 insbesondere in einem Winkel in den ersten Wasseraufnahmeraum 77 des stromabwärts benachbarten Einzelbeckens 71 ein. Damit wird verhindert, dass das Wasser auf direktem Weg von der Einlassöffnung 84 zur Durchflussschlitzöffnung 75 strömt.

Die Aussenwandanordnung 72 enthält erste Verbindungsflächen 85, 86, 87 welche die Einlassöffnung 84 begrenzen. Ferner enthält die Aussenwandanordnung 72 zweite Verbindungsflächen 81, 82, 88, welche die Auslassöffnung 91 begrenzen.

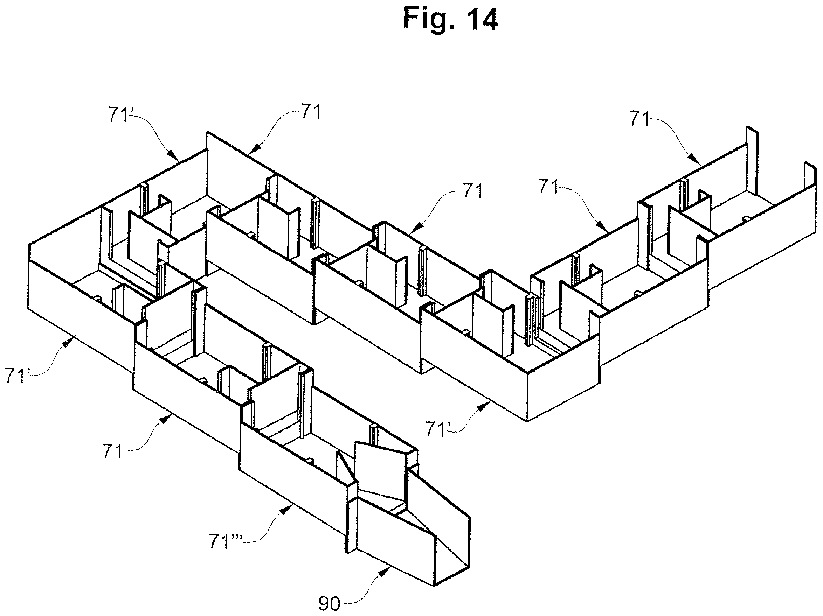

Zur Herstellung der Fischaufstiegsanlage wird das Einzelbecken 71 über die ersten Verbindungsflächen 85, 86, 87 mit den zweiten Verbindungsflächen eines stromaufwärts angeordneten, insbesondere baugleichen, Einzelbeckens verbunden. Ferner wird das Einzelbecken 71 über die zweiten Verbindungsflächen 81, 82, 88 mit den ersten Verbindungsflächen eines stromabwärts angeordneten, insbesondere baugleichen, Einzelbeckens verbunden. Die Verbindung kann mittels Schrauben erfolgen. Die Einzelbecken 71 sind gemäss Figur 12 und 14 zueinander abgestuft zu einer Fischaufstiegsanlage zusammengesetzt.

Das Wasser fliesst nun in Fliessrichtung F durch die Transferschlitzöffnung 76 eines stromaufwärts angeordneten Einzelbeckens 71 über die Auslassflussöffnung 91 aus dem Einzelbecken 71 heraus und durch die Einlassöffnung 84 des stromabwärts unmittelbar anschliessenden Einzelbeckens 71 in den ersten Wasseraufnahmeraum 77 ein. Das einfliessende Wasser ist durch die Richtungsänderung in der Transferschlitzöffnung 76 des stromaufwärts angeordneten Einzelbeckens 71 zur Beruhigungszone 74 hin abgelenkt.

Das Wasser fliesst weiter aus dem ersten Wasseraufnahmeraum 77 durch die Durchflussschlitzöffnung 75 in den zweiten Wasseraufnahmeraum 78 ein. Über die Transferschlitzöffnung 76 fliesst das Wasser in oben beschriebener Weise aus dem Einzelbecken 71 in das stromabwärts anschliessende Einzelbecken 71 ab (siehe auch Figur 12 und 14).

Das vorliegende Einzelbecken 71 enthält ebenfalls einen Boden 83. Am Boden 83 können ebenfalls Querrippen wie im Ausführungsbeispiel nach Figur 3 bis 5 dargestellt, angeordnet sein (nicht gezeigt).

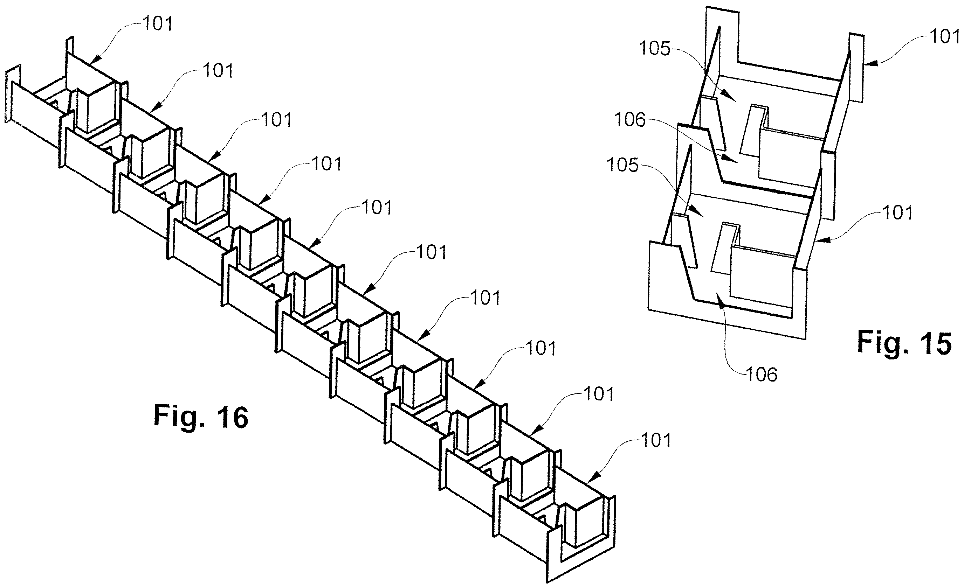

Die Figuren 15 und 16 zeigen eine weitere Ausführungsform einer Fischaufstiegsanlage mit Einzelbecken 101. Die gezeigten Einzelbecken 101 entsprechen im Wesentlichen den in den Figuren 11 bis 14 gezeigten Einzelbecken 71. Die Einzelbecken 101 unterscheiden sich von den Einzelbecken 71 nach Figur 11 bis 14, dadurch, dass der Durchflussschlitz 105 V-förmig ausgebildet ist. Ferner ist der Transferschlitz 106 breiter ausgebildet und weist daher einen grösseren Durchflussquerschnitt auf.

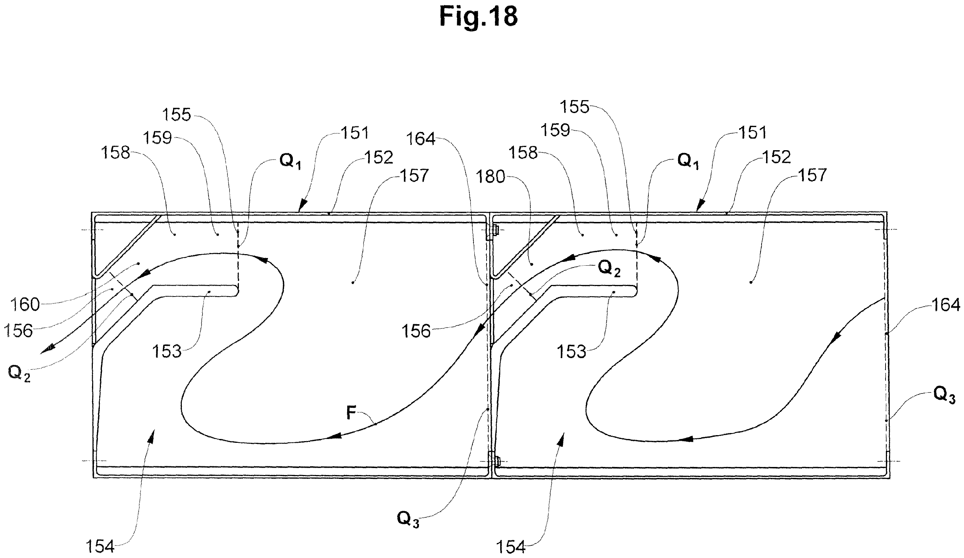

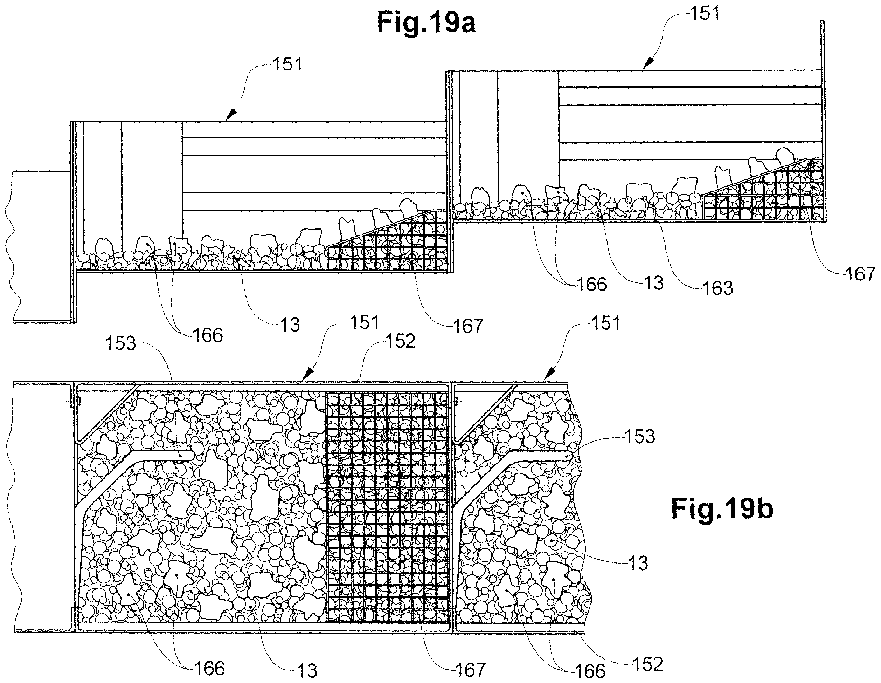

Die Figur 18 zeigt eine weitere Ausführungsform eines Einzelbeckens 151. In der vorliegenden Figur 18 sind zwei solcher Einzelbecken 151 miteinander verbunden dargestellt. Dieselbe Ausführungsform des Einzelbeckens 151 ist im Weiteren auch in Figur 19a-19b, 20a-20b und 21a-21c dargestellt.

Das Einzelbecken 151 gemäss enthält eine Aussenwandanordnung 152 mit Aussenwänden, welche einen Aufnahmeraum 157, 158 begrenzen.

Die Aussenwandanordnung 152 bildet stromaufwärts zum ersten Wasseraufnahmeraum 157 hin eine Einlassöffnung 164 mit einem Durchflussquerschnitt (Q3) aus, über welche Wasser aus einem stromaufwärts benachbarten Einzelbecken 151 in den ersten Wasseraufnahmeraum 157 strömen kann.

Das Einzelbecken 151 enthält ferner eine Innenwandanordnung 153, welche den Aufnahmeraum in einen ersten und zweiten Wasseraufnahmeraum 157, 158 unterteilen. Die beiden Wasseraufnahmeräume 157, 158 sind über eine Durchflussschlitzöffnung 155 miteinander verbunden, so dass Wasser aus dem ersten Wasseraufnahmeraum 157 in den zweiten Wasseraufnahmeraum 158 strömen kann.

Der zweite Wasseraufnahmeraum 158 bildet einen Wasserführungskanal mit einem einströmseitigen ersten Kanalabschnitt 159 mit einem mit einem Durchflussquerschnitt (Q1) und einem ausströmseitigen zweiten Kanalabschnitt 160 mit einem mit einem Durchflussquerschnitt (Q2) aus. Der zweite Kanalabschnitt 160 ist gegenüber dem ersten Kanalabschnitt 159 um 45° zur nachfolgend genannten Beruhigungszone 154 hin abgewinkelt.

Der Durchflussquerschnitt (Q2) des zweiten Kanalabschnitts (160) ist kleiner als der Durchflussquerschnitt (Q1) des ersten Kanalabschnitts (159).

Der zweite Kanalabschnitt 160 bildet eine Transferschlitzöffnung 156 aus, durch welche das Wasser aus dem zweiten Wasseraufnahmeraum 158 und folglich aus dem Einzelbecken 151 abfliessen kann.

Durch die abgewinkelte Ausrichtung des zweiten Kanalabschnittes strömt das Wasser gegenüber dem ersten Kanalabschnitt 159 in einem Winkel durch die Einlassöffnung 164 in den ersten Wasseraufnahmeraum 157 des benachbarten Einzelbeckens 151 ein. Dadurch wird verhindert, dass das Wasser auf direktem Weg von der Einlassöffnung 164 zur Durchflussschlitzöffnung 155 strömt.

Die Innenwandanordnung 153 zur Ausbildung des zweiten Wasseraufnahmeraums 158 ist ferner so ausgestaltet, dass der erste Wasseraufnahmeraum 157 eine taschenförmige Beruhigungszone 154 ausbildet, bei welcher der Ein- und Ausströmbereich auf derselben Seite angeordnet ist. In der Beruhigungszone 154 findet keine Durchströmung statt, so dass sich die Fische in dieser Zone ausruhen und erholen können.

Das Einzelbecken 151 enthält ferner einen Boden 163, auf welchem die Wandanordnungen 152, 153 abgestützt sind.

Das Wasser fliesst nun in Fliessrichtung F durch die Transferschlitzöffnung 156 aus dem stromaufwärts angeordneten Einzelbecken 151 heraus und durch die Einlassöffnung 164 des stromabwärts unmittelbar anschliessenden Einzelbeckens 151 in dessen ersten Wasseraufnahmeraum 157 ein. Das einfliessende Wasser ist durch die Transferschlitzöffnung 156 zur Beruhigungszone 154 hin abgelenkt und dient daher insbesondere auch als Lockströmung bzw. Leitströmung, welche zur Beruhigungszone 154 hin wirkt.

Das Wasser fliesst aus dem ersten Wasseraufnahmeraum 157 durch die Durchflussschlitzöffnung 155 in den zweiten Wasseraufnahmeraum 158 ein. Über die Transferschlitzöffnung 156 fliesst Wasser in oben beschriebener Weise aus dem Einzelbecken 151 in das stromabwärts benachbarte Einzelbecken 151 ab.

Die Figur 19a zeigt die Einzelbeckenanordnung nach Figur 18 in einer Querschnittsansicht und die Figur 19b in einer Draufsicht.

Der Boden 163 der Einzelbecken 151 ist mit einem lockeren Substrat 13 bedeckt. Das Einzelbecken 151 enthält steinförmige Rückhalteelemente 166, welche ortsfest mit dem Boden 163 verbunden sind. Das lockere Substrat 13 wird dabei zwischen den Rückhalteelementen 166 zurückgehalten.

Im ersten Aufnahmeraum 157 des Einzelbecken 151 ist ferner unmittelbar im Anschluss an die Einlassöffnung 164 ein weiteres Rückhalteelement 167 in Form eines Drahtkorbes angeordnet. Der Drahtkorb nimmt lockeres Substrat auf und hält dieses zurück. Der Drahtkorb ist so ausgestaltet, dass dieser mit dem lockeren Substrat 13 eine Strömungsrampe ausbildet. Die Strömungsrampe endet noch im ersten Aufnahmeraum 157 und geht in eine horizontale Sohle über, welche durch das von den Rückhalteelementen 166 zurückgehaltenen Substrat 13 ausgebildet wird.

Das mit erhöhter Strömungsgeschwindigkeit durch die Transferschlitzöffnung 156 und die Einlassöffnung 164 die Strömungsrampe herunter fliessende Wasser wird über der horizontalen Sohle beruhigt bevor dieses durch die Durchlassöffnung 155 in den zweiten Wasseraufnahmeraum 158 strömt.

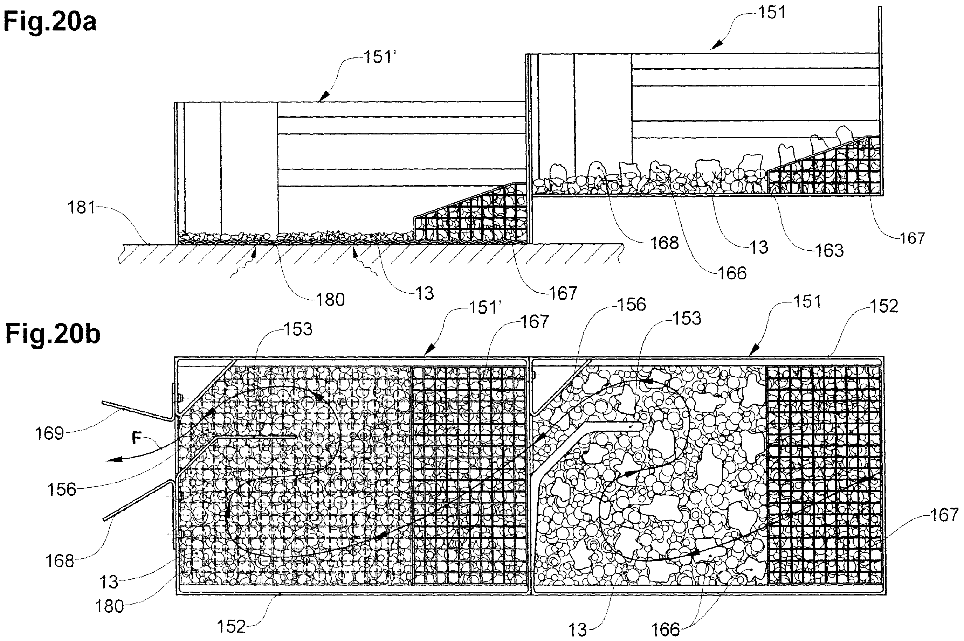

Die Figur 20a und 20b zeigen eine Einzelbeckenanordnung im unteren Mündungsbereich der Fischaufstiegsanlage. Das stromaufwärts angeordnete Einzelbecken 151 entspricht dem Einzelbecken nach Figur 18 bzw. 19a-19b. Das stromabwärts angeordnete Einzelbecken 151' entspricht einem untersten Einzelbecken 151', welches einen Mündungsbereich ausbildet.

Das unterste Einzelbecken 151' liegt direkt dem Untergrund bzw. der Gewässersohle 181 auf und enthält einen durchlässigen Boden 180. Der durchlässige Boden 180 wird durch eine Maschendrahtgitter ausgebildet. Das locker Substrat 13 im Einzelbecken 151' liegt dem Maschendrahtgitter auf.

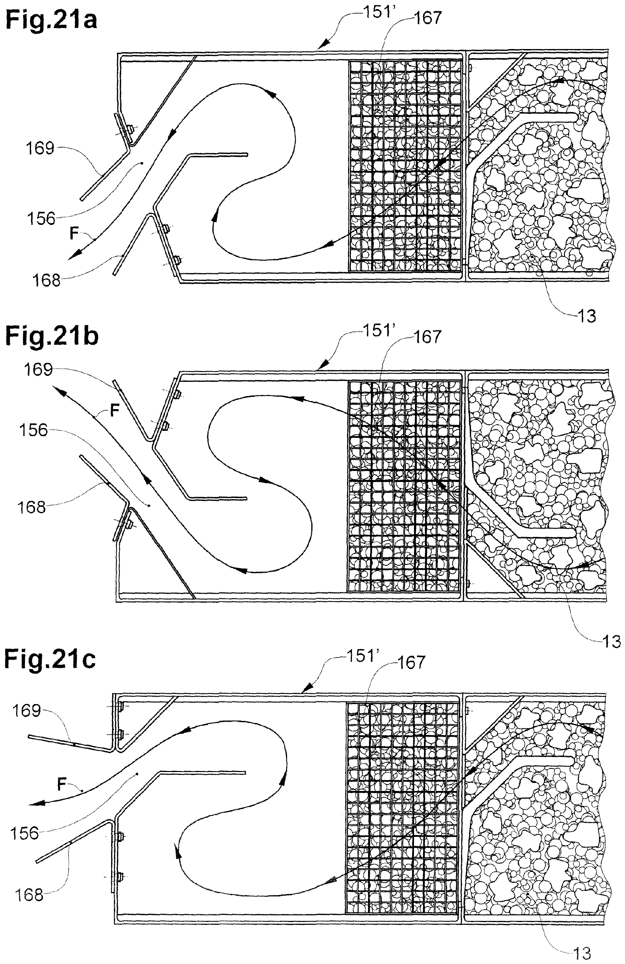

Stromabwärts sind aussen an der Aussenwand im Bereich des Transferschlitzes 156 Wasserleitelemente 168, 169 angeschraubt, welche das durch den Transferschlitz strömende Wasser im Mündungsbereich gezielt in eine bestimmte Richtung leiten. Die Figuren 21a bis 21c zeigen verschiedene Ausführungsformen von Wasserleitelementen 168, 169, welche das Wasser aus der Transferschlitzöffnung im Mündungsbereich in Fliessrichtung F betrachtet nach links, nach rechts oder geradeaus ablenken.

In Figur 21b ist die Fliessrichtung F des Wassers durch die Transferschlitzöffnung 156 um 90° gewendet.

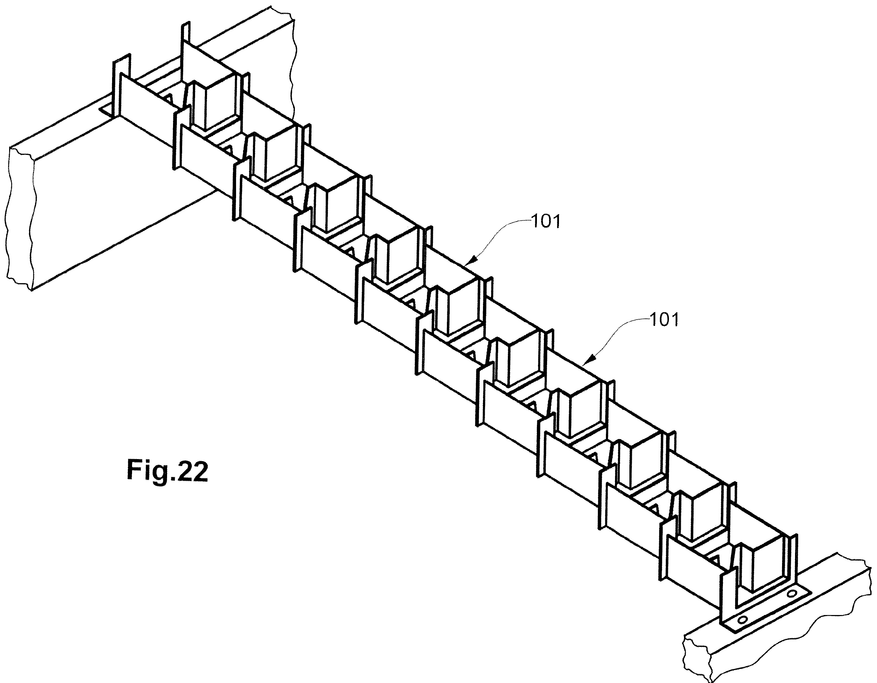

Die Figur 22 zeigt beispielhaft eine selbsttragende Fischaufstiegsanlage mit Einzelbecken 101 nach Figur 15 und 16. Lediglich das oberste und unterste Einzelbecken 101 der Fischaufstiegsanlage ist auf dem Untergrund abgestützt.

## Patentansprüche

1. Einzelbecken (1, 51, 71, 101, 151) für eine Fischaufstiegsanlage mit einer, einen Aufnahmeraum (7, 8; 77, 78; 127, 128; 157 158) ausbildenden Aussenwandanordnung (2, 72, 152) und einer Transferschlitzöffnung (6, 56, 76, 106, 156) für den Durchfluss von Wasser zwischen benachbarten Einzelbecken (71), wobei das Einzelbecken (1, 51, 71, 101, 151) eine Innenwandanordnung (3, 73, 153) enthält, welche den Aufnahmeraum (7, 8; 77, 78; 127, 128; 157 158) in einen ersten und zweiten Wasseraufnahmeraum (7, 8; 77, 78; 127, 128; 157 158) unterteilt, wobei die Wasseraufnahmeräume (7, 8; 77, 78; 127, 128; 157 158) über eine Durchflussschlitzöffnung (5, 55, 75, , 105, 155) für den Durchfluss des Wasser aus dem ersten Wasseraufnahmeraum (7, 77, 127, 157) in den zweiten Wasseraufnahmeraum (8, 78, 128, 158) miteinander verbunden sind, und im ersten Wasseraufnahmeraum (7, 77, 127, 157) stromabwärts betrachtet neben dem zweiten Wasseraufnahmeraum (8, 78, 128, 158) eine Wasserberuhigungszone (4, 54, 74, 154) ausgebildet wird,
**dadurch gekennzeichnet, dass**
der zweite Wasseraufnahmeraum (8, 78, 128, 158) mit der Transferschlitzöffnung (6, 56, 76, 106, 156) so ausgebildet ist, dass das durch die Transferschlitzöffnung (6, 56, 76, 106, 156) strömende Wasser schräg zu einer mittleren Strömungsrichtung in ein stromabwärts benachbartes Einzelbecken (1, 51, 71, 101, 151) eingeleitet und zur Wasserberuhigungszone (4, 54, 74, 154) hin abgelenkt wird.

2. Einzelbecken nach Anspruch 1, **dadurch gekennzeichnet, dass** der zweite Wasseraufnahmeraum (158) einen Wasserführungskanal mit einem einströmseitigen ersten Kanalabschnitt (159) und einem ausströmseitigen zweiten Kanalabschnitt (160) enthält und die beiden Kanalabschnitte (159, 160) einen Winkel einschliessen.

3. Einzelbecken nach Anspruch 2, **dadurch gekennzeichnet, dass** der Durchflussquerschnitt (Q2) des zweiten Kanalabschnitts (160) kleiner ist als der Durchflussquerschnitt (Q1) des ersten Kanalabschnitts (159).

4. Einzelbecken nach einem der Ansprüche 1 bis 3, **dadurch gekennzeichnet, dass** die Aussenwandanordnung (2, 72, 152) stromaufwärts eine Einlassöffnung (19, 84, 164) zum ersten Wasseraufnahmeraum (7, 77, 157) hin ausbildet.

5. Einzelbecken nach Anspruch 4, **dadurch gekennzeichnet, dass** der zweite Wasseraufnahmeraum (8, 58, 78, 128, 158) derart ausgestaltet ist, dass die Richtung des durch die Transferschlitzöffnung (6, 56, 76, 106, 156) aus dem zweiten Wasseraufnahmeraum (8, 58, 78, 128, 158) ausströmenden Wassers gegenüber einer, durch den Durchflussquerschnitt (Q3) der Einlassöffnung (19, 84, 164) ausgebildeten Durchflussebene einen Winkel einschliessen.

6. Einzelbecken nach einem der Ansprüche 1 bis 5, **dadurch gekennzeichnet, dass** die Transferschlitzöffnung (6, 76) durch zwei Wandabschnitte (9, 10; 79, 80) ausgebildet wird, welche zueinander versetzt angeordnet sind.

7. Einzelbecken nach einem der Ansprüche 1 bis 6, **dadurch gekennzeichnet, dass** das Einzelbecken (1, 51, 71, 101, 151) aus faserverstärktem Kunststoff hergestellt ist.

8. Fischaufstiegsanlage mit einer Mehrzahl von miteinander verbundenen, eine Durchflussstrecke ausbildenden Einzelbecken (1, 51, 71, 101, 151) nach einem der Ansprüche 1 bis 7.

9. Fischaufstiegsanlage nach Anspruch 8, **dadurch gekennzeichnet, dass** in der Aussenwandanordnung (72) der Einzelbecken (71) Verbindungsbereiche mit Verbindungsflächen (81, 82, 88; 85, 86, 87) ausgebildet sind, und die Einzelbecken (71) über die Verbindungsflächen (81, 82, 88; 85, 86, 87) miteinander flächig verbunden, insbesondere lösbar verbunden sind.

10. Fischaufstiegsanlage nach Anspruch 9, **dadurch gekennzeichnet, dass** die Einzelbecken (1, 71, 101, 151) eine polygonale Grundform ausbilden und jeweils zwei, einander nicht benachbarte erste Aussenwände und zwei, einander nicht benachbarte zweite Aussenwände enthalten, welche in einem Winkel zu den ersten Aussenwänden verlaufen, wobei die zweiten Aussenwände als Verbindungswände ausgebildet sind, und zwei benachbarte Einzelbecken (1, 71, 101, 151) über die zweiten Aussenwände miteinander verbunden sind.

11. Fischaufstiegsanlage nach Anspruch 10, **dadurch gekennzeichnet, dass** die Aussenwandanordnung (72) in den Verbindungsbereichen (81, 82, 88; 85, 86, 87) stromaufwärts eine Einlassöffnung (84) zum ersten Wasseraufnahmeraum (77) hin ausbildet.

12. Fischaufstiegsanlage nach Anspruch 11, **dadurch gekennzeichnet, dass** in Fliessrichtung (F) betrachtet an die Transferschlitzöffnung (76) die Aussenwandanordnung (72) mit einem Verbindungsbereich und einer im Verbindungsbereich angeordneten Auslassöffnung (91) anschliesst, wobei der Öffnungsquerschnitt der Auslassöffnung (91) grösser ist als der Öffnungsquerschnitt der Transferschlitzöffnung (76).

13. Fischaufstiegsanlage nach einem der Ansprüche 8 bis 12, **dadurch gekennzeichnet, dass** zwei benachbarte Einzelbecken (1, 51, 71, 101, 151) jeweils eine Stufe ausbilden.

14. Fischaufstiegsanlage nach einem der Ansprüche 8 bis 13, **dadurch gekennzeichnet, dass** die Fischaufstiegsanlage eine als Unterbau ausgestaltete Stützstruktur, insbesondere ein Untergestell enthält, auf welcher die Einzelbecken abgestützt sind.

15. Fischaufstiegsanlage nach Anspruch 14, **dadurch gekennzeichnet, dass** die Stützstruktur über Stützfüsse auf dem Terrain abgestützt und verankert ist.

16. Fischaufstiegsanlage nach einem der Ansprüche 8 bis 13, **dadurch gekennzeichnet, dass** die Einzelbecken (101) miteinander zu einer freitragenden Struktur verbunden sind.

17. Fischaufstiegsanlage nach einem der Ansprüche 8 bis 16, **dadurch gekennzeichnet, dass** die Transferschlitzöffnung (156) des stromabwärts untersten Einzelbeckens (151') in einem Mündungsbereich mündet, und am Einzelbecken (151') wenigstens ein Wasserleitelement (168, 169) angeordnet ist, mittels welchem die Fliessrichtung (F) des durch die Transferschlitzöffnung (156) fliessenden Wassers im Mündungsbereich einstellbar ist.

## Claims

1. An individual basin (1, 51, 71, 101, 151) for a fish ladder facility, with an outer wall arrangement (2, 72, 152) which forms a receiving space (7, 8; 77, 78; 127, 128; 157, 158) and with a transfer slot opening (6, 56, 76, 106, 156) for the passage of water between adjacent individual basins (71), wherein the individual basin (1, 51, 71, 101, 151) comprises an inner wall arrangement (3, 73, 153) which subdivides the receiving space (7, 8; 77, 78; 127, 128; 157, 158) into a first and a second water receiving space (7, 8; 77, 78; 127, 128; 157, 158), wherein the water receiving spaces (7, 8; 77, 78; 127, 128; 157, 158) are connected to one another via a through-flow slot opening (5, 55, 75, 105, 155) for the through-flow of water out of first water receiving space (7, 77, 127, 157) into the second water receiving space (8, 78, 128, 158), and a water calming zone (4, 54, 74, 154) is formed in the first water receiving space (7, 77, 127, 157) next to the second water receiving space (8, 78, 128, 158) considered downstream,
**characterised in that**
the second water receiving space (8, 78, 128, 158) with the transfer slot opening (6, 56, 76, 106, 156) is designed such that the water which flows through the transfer slot opening (6, 56, 76, 106, 156) is led obliquely to an overall flow direction into an individual basin (1, 51, 71, 101, 151) which is adjacent downstream, and is deflected towards the water calming zone (4, 54, 74, 154).

2. An individual basin according to claim 1, **characterised in that** the second water receiving space (158) comprises a water guidance channel with a first channel section (159) at the inflow side and with a second channel section (160) at the outflow side and the two channel sections (159, 160) enclose an angle.

3. An individual basin according to claim 2, **characterised in that** the flow cross section (Q2) of the second channel section (160) is smaller than the flow cross section (Q1) of the first channel section (159).

4. An individual basin according to one of the claims 1 to 3, **characterised in that** the outer wall arrangement (2, 72, 152) upstream forms an inlet opening (19, 84, 164) towards the first water receiving space (7, 77, 157).

5. An individual basin according to claim 4, **characterised in that** the second water receiving space (8, 58, 78, 128, 158) is designed in a manner such that the direction of the water which flows through the transfer slot opening (6, 56, 76, 106, 156) out of the second water receiving space (8, 58, 78, 128, 158) encloses an angle with respect to a through-flow plane which is formed by the flow cross section (Q3) of the inlet opening (19, 84, 164).

6. An individual basin according to one of the claims 1 to 5, **characterised in that** the transfer slot opening (6, 7) is formed by two wall sections (9, 10; 79, 80) which are arranged offset to one another.

7. An individual basin according to one of the claims 1 to 6, **characterised in that** the individual basin (1, 51, 71, 101, 151) is manufactured of fibre-reinforced plastic.

8. A fish ladder facility with a plurality of individual basins (1, 51, 71, 101, 151) according to one of the claims 1 to 7, said individual basins forming a flow path.

9. A fish ladder facility according to claim 8, **characterised in that** connecting regions with connecting surfaces (81, 82, 88; 85, 86, 87) are formed in the outer wall arrangement (72) of the individual basins (71), and the individual basins (71) are connected to one another in a surfaced manner, in particular in a releasable manner, via the connecting surfaces (81, 82, 88; 85, 86, 87).

10. A fish ladder facility according to claim 9, **characterised in that** the individual basins (1, 71, 101, 151) form a polygonal base shape and each comprise two first outer walls which are not adjacent to one another and two second outer walls which are not adjacent to one another and which run at an angle to the first outer walls, wherein the second outer walls are designed as connecting walls, and two adjacent individual basins (1, 51, 71, 101, 151) are connected to one another via the second outer walls.

11. A fish ladder facility according to claim 10, **characterised in that** the outer wall arrangement (72) in the connecting regions (81, 82, 88; 85, 86, 87) upstream forms an inlet opening (4) to the first water receiving space (77).

12. A fish ladder facility according to claim 11, **characterised in that** considered in the flow direction (F), the outer wall arrangement (72) with a connecting region and with an outlet opening (91) which is arranged in the connecting region connects onto the transfer slot opening (76), wherein the opening cross section of the outlet opening (91) is larger than the opening cross section of the transfer slot opening (76).

13. A fish ladder facility according to one of the claims 8 to 12, **characterised in that** two adjacent individual basins (1, 51, 71, 101, 151) each form a step.

14. A fish ladder facility according to one of the claims 8 to 13, **characterised in that** the fish ladder facility comprises a support structure which is designed as a sub-structure, in particular a base mount, on which the individual basins are supported.

15. A fish ladder facility according to claim 14, **characterised in that** the support structure is supported and anchored on the terrain via support feet.

16. A fish ladder facility according to one of the claims 8 to 13, **characterised in that** the individual basins (10) are connected to one another into a self-supporting structure.

17. A fish ladder facility according to one of the claims 8 to 16, **characterised in that** the transfer slot opening (156) of the individual basin (151') which is lowermost downstream runs out into a run-out region, and at least one water guidance element (168, 169) is arranged on the individual basin (151'), by way of which guidance element the flow direction (F) of the water which flows through the transfer slot opening (156) can be adjusted in the run-out region.

## Revendications

1. Bassin individuel (1, 51, 71, 101, 151) pour passe à poissons, doté d'un ensemble (2, 72, 152) de parois extérieures qui forme un espace de réception (7, 8; 77, 78; 127, 128; 157, 158) et une ouverture de transfert (6, 56, 76, 106, 156) en fente permettant le passage de l'eau entre des bassins individuels (71) voisins,
le bassin individuel (1, 51, 71, 101, 151) contenant un ensemble (3, 73, 153) de parois intérieures qui divise l'espace de réception (7, 8; 77, 78; 127, 128; 157, 158) en un premier et un deuxième espace de réception (7, 8; 77, 78; 127, 128; 157, 158), les espaces de réception (7, 8; 77, 78; 127, 128; 157, 158) étant reliés l'un à l'autre par une ouverture de passage (5, 55, 75, 105, 155) en fente permettant le passage de l'eau entre le premier espace de réception (7, 77, 127, 157) et le deuxième espace de réception (8, 78, 128, 158) espace de réception (8, 78, 128, 158), une zone (4, 54, 74, 154) de calmage d'eau étant formée dans le premier espace de réception (7, 77, 127, 157) en aval du deuxième espace de réception (8, 78, 128, 158),
**caractérisé en ce que**
le deuxième espace de réception (8,78, 128, 158) doté de l'ouverture de transfert (6, 56, 76, 106, 156) est configuré de telle sorte que l'eau qui s'écoule par l'ouverture de transfert (6, 56, 76, 106, 156) est introduite obliquement par rapport à la direction centrale d'écoulement dans un bassin individuel (1, 51, 71, 101, 151) aval voisin et est déviée en direction de la zone (4, 54, 74, 154) de calmage d'eau.

2. Bassin individuel selon la revendication 1, **caractérisé en ce que** le deuxième espace (158) de reprise d'eau contient un canal d'amenée d'eau présentant une première section de canal (159) située du côté de l'entrée et une deuxième section de canal (160) située du côté de la sortie, les deux sections de canal (159, 160) formant entre elles un angle.

3. Bassin individuel selon la revendication 2, **caractérisé en ce que** la section transversale d'écoulement (Q2) de la deuxième section de canal (160) est plus petite que la section transversale d'écoulement (Q1) de la première section de canal (159) .

4. Bassin individuel selon l'une des revendications 1 à 3, **caractérisé en ce que** l'ensemble (2, 72, 152) de parois extérieures forme en amont une ouverture (19, 84, 164) d'entrée vers le premier espace de réception (7, 8; 77, 78; 127, 128; 157, 158).

5. Bassin individuel selon la revendication 4, **caractérisé en ce que** le deuxième espace de réception (8,78, 128, 158) est configuré de telle sorte que la direction de l'eau qui sort du deuxième espace de réception (8,78, 128, 158) par l'ouverture de transfert (6, 56, 76, 106, 156) forme un angle par rapport à un plan de passage formé par la section transversale de passage (Q3) de l'ouverture (19, 84, 164) d'entrée.

6. Bassin individuel selon l'une des revendications 1 à 5, **caractérisé en ce que** l'ouverture de transfert (6, 56, 76, 106, 156) est formée par deux sections de paroi (9, 10; 79, 80) décalées l'une par rapport à l'autre.

7. Bassin individuel selon l'une des revendications 1 à 6, **caractérisé en ce que** le bassin individuel (1, 51, 71, 101, 151) est réalisé en matière synthétique renforcée de fibres.

8. Passe à poissons présentant plusieurs bassins individuels (1, 51, 71, 101, 151) selon l'une des revendications 1 à 7 qui sont reliées entre elles et formant un parcours de passage.

9. Passe à poissons selon la revendication 8, **caractérisée en ce que** dans l'ensemble (72) de parois extérieures du bassin individuel (71) sont formées des parties de liaison avec des surfaces de liaison (81, 82, 88; 85, 86, 87), les bassins individuels (71) étant reliés à plat les uns aux autres, en particulier de manière libérable, par les surfaces de liaison (81, 82, 88; 85, 86, 87).

10. Passe à poissons selon la revendication 9, **caractérisée en ce que** les bassins individuels (1, 51, 71, 101, 151) ont une forme polygonale de base et contiennent chacun deux premières parois extérieures non voisines l'une de l'autre et deux deuxièmes parois extérieures non voisines l'une de l'autre et qui s'étendent sous un angle par rapport aux premières parois extérieures, les deuxièmes parois extérieures étant configurées comme parois de liaison et deux bassins individuels (1, 51, 71, 101, 151) sont reliés l'un à l'autre par les deuxièmes parois extérieures.

11. Passe à poissons selon la revendication 10, **caractérisée en ce que** l'ensemble (72) de parois extérieures forme en amont dans les parties de liaison (81, 82, 88; 85, 86, 87) une ouverture d'entrée (84) dans le premier espace (77) de reprise d'eau.

12. Passe à poissons selon la revendication 11, **caractérisée en ce que** dans la direction d'écoulement (F), l'ensemble (72) de parois extérieures se raccorde à l'ouverture de transfert (76) en fente par une partie de liaison et une ouverture de sortie (91) disposée dans la partie de liaison, la section transversale de l'ouverture de sortie (91) étant plus grande que la section transversale de l'ouverture de transfert (76) en fente.

13. Passe à poissons selon l'une des revendications 8 à 12, **caractérisée en ce que** deux bassins individuels (1, 51, 71, 101, 151) voisins forment chaque fois un gradin.

14. Passe à poissons selon l'une des revendications 8 à 13, **caractérisée en ce que** la passe à poissons contient une structure de soutien configurée comme soubassement, en particulier un bâti inférieur sur lequel sont soutenus les bassins individuels.

15. Passe à poissons selon la revendication 14, **caractérisée en ce que** la structure de soutien est soutenue sur le terrain par des pieds de soutien et est ancrée.

16. Passe à poissons selon l'une des revendications 8 à 13, **caractérisée en ce que** les bassins individuels (101) sont reliés les uns aux autres pour former une structure autoportante.

17. Passe à poissons selon l'une des revendications 8 à 16, **caractérisée en ce que** l'ouverture de transfert (156) en fente du bassin individuel (151') situé le plus bas en aval débouche dans une partie d'embouchure et **en ce qu'**au moins un élément (168, 169) de guidage d'eau au moyen duquel la direction d'écoulement (F) de l'eau qui s'écoule par l'ouverture de transfert (156) en fente peut être ajustée dans la zone d'embouchure, est disposé sur le bassin individuel (151').
